(19) Europäisches Patentamt / European Patent Office / Office européen des brevets

(11) **EP 4 783 516 A1**

(12) **EUROPEAN PATENT APPLICATION**

(43) Date of publication:
29.07.2026 Bulletin 2026/31

(21) Application number: **26153510.8**

(22) Date of filing: **22.01.2026**

(51) International Patent Classification (IPC):
*H04L 9/30* (2006.01)    *H04L 9/32* (2006.01)

(52) Cooperative Patent Classification (CPC):
H04L 9/3093; H04L 9/3247; H04L 9/3255

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: **22.01.2025 GB 202500923**

(71) Applicant: **Cybernetica AS**
**12618 Tallinn (EE)**

(72) Inventors:
• LAUD, Peeter
12618 Tallinn (EE)
• KRAVTSENKO, Semjo
12618 Tallinn (EE)

(74) Representative: **Finlayson, Scott Henry et al**
**Kilburn & Strode LLP**
**Lacon London**
**84 Theobalds Road**
**London WC1X 8NL (GB)**

(54) **TWO PARTY SIGNING WITH LATTICE-BASED ENCRYPTION**

(57)    A computer-implemented method for two-party computation of a digital signature of a message using a lattice-based digital signature scheme, wherein the lattice-based digital signature scheme uses a public key and a private key comprising a first private key share and a second private key share. The method comprises, at a first party 110, receiving the message for signing and retrieving the first private key share held by the first party. The method comprises, at a first party, computing 216 a first party share of the digital signature based on the message, the first private key share and secret-shared data, wherein secret-sharing is performed with a second party which holds the second private key share. The method comprises, at a first party, receiving a second party share of the digital signature from the second party; and forming 218 the digital signature by combining the first party share of the digital signature and the second party share of the digital signature.

FIG. 2

**Description**

**Technical Field**

This disclosure describes mechanisms for distributed digital signature involving two parties.

**Background**

A digital signature is a scheme for demonstrating the authenticity of a digital message or document. If a recipient is able to confirm that a digital signature appended to a digital message is valid then that recipient can reasonably believe that the message was created by a known or trusted sender, that the sender cannot deny having sent the message, and that the message was not altered in transit. Digital signatures are used to verify the authenticity of messages, documents and other assets, such as websites.

Often digital signature schemes use an asymmetric pair of keys: a public key and a private key. A sender's secret key is used to generate a digital signature and the sender's public key is used by a recipient of the digital signature to verify that the digital signature, and any message to which the digital signature relates, originated with the sender.

The security of a signing scheme relies on the secrecy of the used private key material. One way to increase the security of a signing scheme is to distribute the secret material across multiple devices, such that a sufficient number of devices need to cooperate to create a digital signature. There are some two-party and multi-party schemes to implement digital signing schemes for legacy encryption schemes. WO 2018/073685 A1 describes generating a composite digital signature by a combination of steps performed at a first party and a second party.

There is now considerable interest in cryptographic schemes which are secure against attacks by the increased computing power of quantum computers.

Module-Lattice-Based Digital Signature Standard (ML-DSA) is a digital signature algorithm standardised by the National Institute of Standards and Technology (NIST) as Federal Information Processing Standards Publication FIPS 204. ML-DSA is based on a scheme called CRYSTALS (Cryptographic Suite for Algebraic Lattices)-Dilithium. It is believed that it would be infeasible to forge an ML-DSA signature even with a sufficiently powerful quantum computer. ML-DSA defines three main algorithms: (i) a key generation algorithm which generates a private key and a public key; (ii) a signing algorithm which signs a message using the private key; and (iii) a verify algorithm which verifies if a signature is valid with respect to the public key. ML-DSA is intended to be implemented on a single device. That is, ML-DSA is intended to create, store and use the private key material in a single place.

**Summary**

An aspect provides a computer-implemented method for two-party computation of a digital signature of a message using a lattice-based digital signature scheme, wherein the lattice-based digital signature scheme uses a public key and a private key comprising a first private key share and a second private key share, the method comprising at a first party:

> receiving the message for signing;
> retrieving the first private key share held by the first party;
> computing a first party share of the digital signature based on the message, the first private key share and secret-shared data, wherein secret-sharing is performed with a second party which holds the second private key share;
> receiving a second party share of the digital signature from the second party; and
> forming the digital signature by combining the first party share of the digital signature and the second party share of the digital signature.

Optionally, the method further comprises, after forming the digital signature by combining the first party share of the digital signature and the second party share of the digital signature, verifying the digital signature at the first party.

Optionally, the verifying comprises computing a hash of the message M, the public key and the digital signature.

Optionally, the method further comprises sending the digital signature to the second party when the verifying is successful.

Optionally, the method further comprises destroying the first private key share if the verifying is not successful.

Optionally, computing the digital signature comprises generating a first party share of a masking vector $\mathbf{y}$ of polynomials with coefficients.

Optionally, generating a first party share of a masking vector comprises generating random bits of the coefficients.

Optionally, computing the digital signature comprises:

computing a first party share of a matrix-vector product **w** by multiplying a matrix **A** from the public key and the first party share of the masking vector **y,** wherein the first party share of the matrix-vector product **w** comprises polynomials with first party shares of the coefficients, and

determining high bits values of the coefficients of the matrix-vector product **w.**

Optionally, determining the high bits values of the coefficients of the matrix-vector product **w** comprises determining the first party's share of the high bits value in the matrix-vector product **w.**

Optionally, determining the first party's share of the high bits value in the matrix-vector product **w** comprises:

computing a first party share of a masked quantity using the first party share of the coefficient values and a first party share of a secret-shared random value s;

sending the first party share of the masked quantity to the second party and receiving a second party share of the masked quantity from the second party;

recovering a combined masked quantity using the first party masked quantity and the second party masked quantity.

Optionally, the further comprises:

splitting the combined masked quantity into digits according to a mixed-radix basis;

receiving the first party share of the characteristic vectors corresponding to the digits of random value s;

summing the first party shares of the characteristic vectors of the digits of the random value s with the corresponding digits of the masked quantity.

The summing performs carries for digits that overflow the corresponding radix.

Optionally, the radix basis comprises the values: 31, 24, 16, 16, 89 for an ML-DSA scheme with a value of $\alpha = 190464$ and the radix basis comprises the values: 31, 33, 32, 16, 33 for an ML-DSA scheme with a value of $\alpha = 523776$.

Optionally, a total high bits value for a coefficient of the matrix-vector product **w** comprises the first party's share of the high bits value and the second party's share of the high bits value, the method comprising:

sending the first party's share of the high bits value to the second party; and

receiving the second party's share of the high bits value from the second party; and

recovering the total high bits value by summing the first party's share of the high bits value and the second party's share of the high bits value.

Optionally, the method further comprises computing a challenge value c comprising a hash of the message M with the total high bits values of the coefficients of the matrix-vector product **w.**

Optionally, the method further comprises:

determining a first party share of a secret-shared signature quantity z computed using the first party share of the masking vector **y,** the challenge value c and a first party share of the secret key; and

performing a first rejection check on coefficient values of the secret-shared signature quantity z by cooperation with the second party.

Optionally, the method further comprises receiving an outcome of the first rejection check based on a comparison of the first party share and the second party share of the secret-shared signature quantity z.

Optionally, the method further comprises:

determining a first party share of a further secret-shared quantity x computed using the first party share of the matrix-vector product **w,** the challenge value c and a first party share of the secret key; and

performing a second rejection check on coefficient values of the further secret-shared signature quantity x by cooperation with the second party.

Optionally, the method further comprises receiving an outcome of the second rejection check based on a comparison of the first party share and the second party share of the further secret-shared signature quantity x.

Optionally, the method further comprises declassifying the signature quantity z to the first party if the first rejection check passes and the second rejection check passes.

Optionally, communication between the first party and the second party makes asymmetric use of authentication codes.

Optionally, the first party share of the signature comprises the quantity z and the challenge value c

Optionally, the first party sends data to the second party using a combination of the data and at least one first party authentication code.

Optionally, the first party receives data from the second party using a combination of the data and at least one second party authentication code.

Optionally, the method further comprises generating the public key and the first private key share.

Optionally, the method further comprises receiving first party shares of random values s from a correlated randomness provider.

Optionally, the method further comprises receiving a seed from the correlated randomness provider and generating a plurality of first party shares of random values from the seed.

Optionally, the lattice-based digital signature scheme is Module-Lattice-Based Digital Signature Standard (ML-DSA).

The first party may be a client device. Alternatively, the first party may be a server. Much of the functionality of the method is the same for each of the first party and the second party.

An aspect provides a computer-implemented method for two-party computation of a digital signature of a message using a lattice-based digital signature scheme, wherein the lattice-based digital signature scheme uses a public key and a private key comprising a first private key share and a second private key share, the method comprising at a second party:

> receiving the message for signing or a hash of the message for signing;
> retrieving the second private key share held by the second party;
> computing a second party share of the digital signature based on the message, the second private key share and secret-shared data, wherein secret-sharing is performed with a first party which holds the first private key share; and
> outputting the second party share of the digital signature to the first party.

The method performed by the second party may perform all, or some of, the functionality described for the method performed by the first party.

An aspect provides an apparatus configured to perform the method of the second party.

An aspect provides a computer readable medium having instructions stored thereon which when executed by a processor cause the processor to perform any of the methods as described or claimed.

An aspect provides a system comprising an apparatus configured to perform the method of the first party and an apparatus configured to perform the method of the second party.

One advantage of the disclosure is that a lattice-based digital signature scheme, such as ML-DSA, is implemented across multiple parties. The process of generating a valid signature requires the collaboration of the first party and the second party. This increases security as an adversary must actively, or passively, compromise both of the parties to break the scheme. For example, if the server was the only party involved in forming the digital signature, then a successful attack on the server may allow the attacker to create many fake digital signatures in the name of users.

In ML-DSA, a single party performs all of the computation to generate a signature for a message. In this two-party scheme, the computation is shared between two parties (client, server). At each stage of the algorithm, each of the parties only holds a share of an overall value. For example, one stage of the ML-DSA algorithm analyses coefficient values of a matrix and splits the coefficient values into high bits and low bits. This stage is more difficult to implement in a two-party scheme as each client only holds a share of the coefficient values. The method uses secret-sharing techniques. For a quantity in the algorithm having a value v, each party holds a share v which is part of the overall value v. Each party is not aware of the value of the share held by the other party.

**Brief Description of the Drawings**

The present disclosure will now be described in detail, with reference to the accompanying drawings, in which:

> Figure 1 shows an example overall system architecture, including a server and a client device, for performing a digital signature method;

> Figure 2 shows another example of a system architecture for implementing the method;

> Figure 3 shows an overview of the ML-DSA signature scheme;

> Figure 4 shows an overview of a method for performing a signing attempt;

> Figures 5A and 5B show the method of performing a signing attempt in more detail;

Figure 6 shows a protocol used in the high bits stage of the signing attempt;

Figures 7A and 7B show a reshare to parts protocol used in the high bits stage of the signing attempt;

Figure 8 shows an equality check used in the method for performing a signing attempt;

Figure 9 shows an asymmetric reshare to parts protocol used in rejection checks;

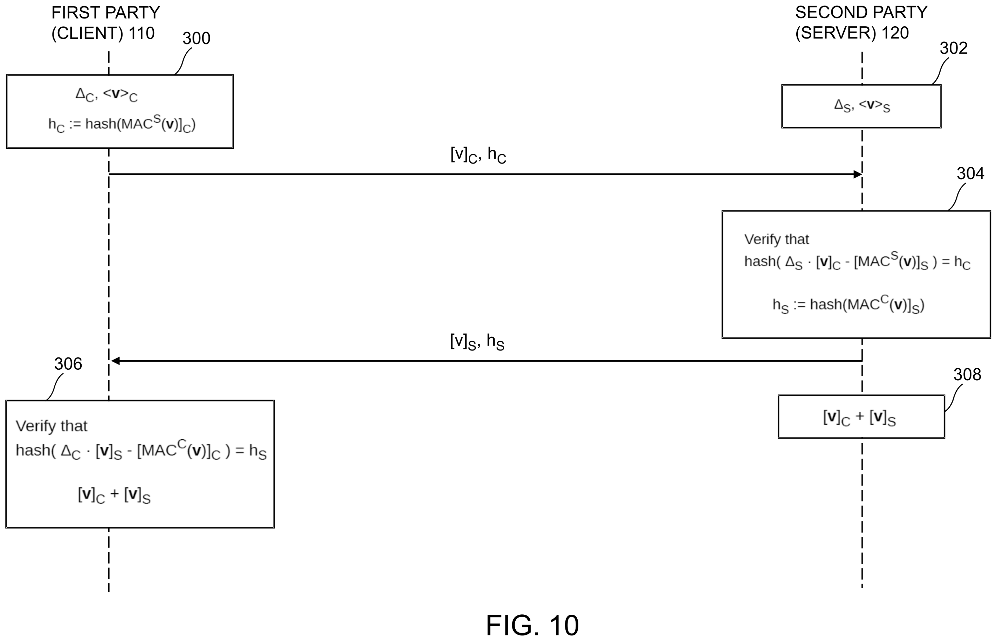

Figure 10 shows a declassifying stage of the method for performing a signing attempt;

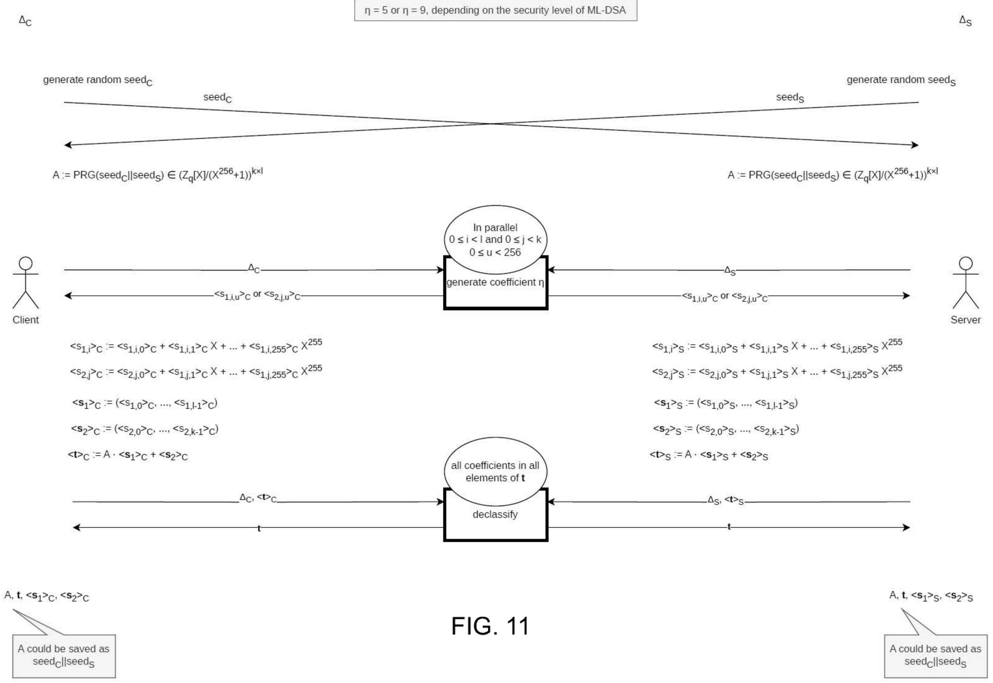

Figure 11 shows key generation;

Figure 12 shows an example protocol for signing;

Figure 13 shows an example protocol for a signing attempt;

Figure 14 shows an example protocol for computing high bits;

Figure 15 shows an example protocol for an equals zero check;

Figure 16 shows an example protocol for symmetric reshare to parts;

Figure 17 shows an example protocol for a rejection check;

Figure 18 shows an example protocol for declassifying;

Figure 19 shows an example protocol for key generation;

Figure 20 shows an example protocol for asymmetric reshare to parts;

Figure 21 shows a schematic representation of a computer apparatus which can be used to perform the methods.

Like reference numerals are used for like components throughout the description and drawings.

## Detailed Description

ML-DSA is described in NIST publication FIPS 204. ML-DSA is based on the CRYSTALS-Dilithium signature scheme, which is described in CRYSTALS-Dilithium: A Lattice-Based Digital Signature Scheme, Ducas et al., IACR Transactions on Cryptographic Hardware and Embedded Systems Vol. 2018, No. 1, pp. 238-268.

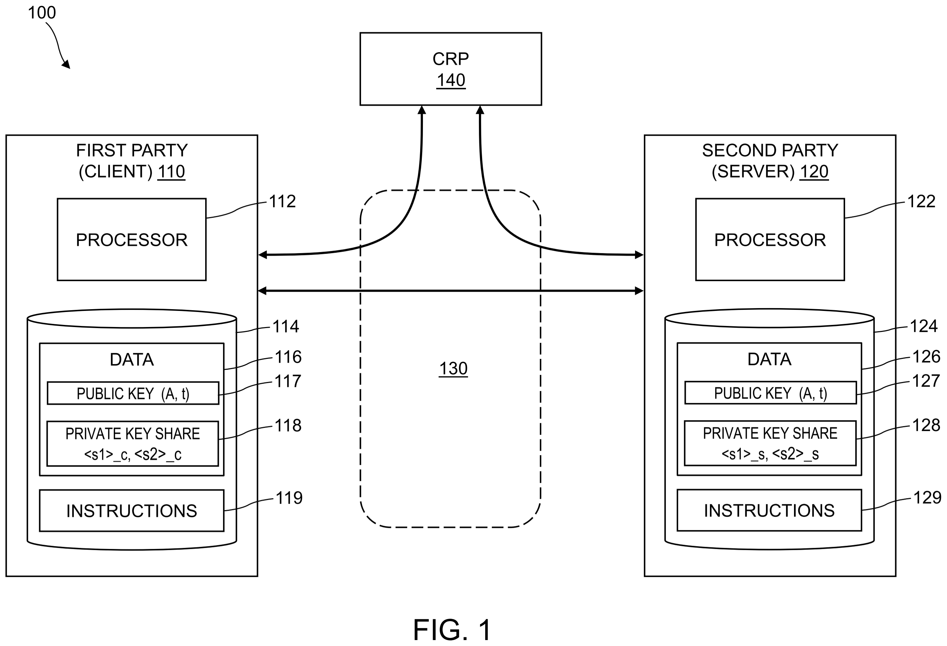

Figure 1 shows an example of a system architecture for implementing the method according to the present disclosure. The system comprises a first party device 110 and a second party device 120, connected to one another over a network 130.

The first party device 110 may be a client device, such as a mobile phone, a smartphone, a tablet device, a laptop, a PC or other computing device.

The second party device 120 may be a server. The server may be configured to service a plurality of connections to client devices 110. However, in some examples, the second party device may be a client device similar to device 110. In the following description, the first party device 110 will be called a client device and the second party device 120 will be called a server. However, the reader will understand that the scope of the present disclosure is not limited to this.

The first party device 110 has one or more processors 112 and a memory 114 for storing data 116 and instructions 119. The second party device 120 has one or more processors 122 and a memory 124 for storing data 124 and instructions 129.

The network connection 130 may be a wired connection or a wireless connection. For example, the network connection may be a Wireless Wide Area Network (e.g. a 2G, 3G, 4G, 4G LTE, or 5G cellular connection), or a Wireless Local Area Network connection (e.g. WiFi). Where devices 110 and 120 are both client devices, the connection may even be a near field connection, such as Bluetooth. As the reader will understand, this is a non-exhaustive list of possible connections between the devices 110, 120.

Figure 1 shows some of the data 116 stored in the memory 114 of the client device 110. The data 116 comprises the full public key pk 117 and the client's share of the private key sk = <s1>_c, <s2>_c 118. Some of the data 126 stored in the memory 124 of the server 120 comprises the full public key pk 127 and the server's share of the private key sk = <s1>_s, <s2>_s. The server may store server shares of a large number of private keys, corresponding to server shares for different client devices 110.

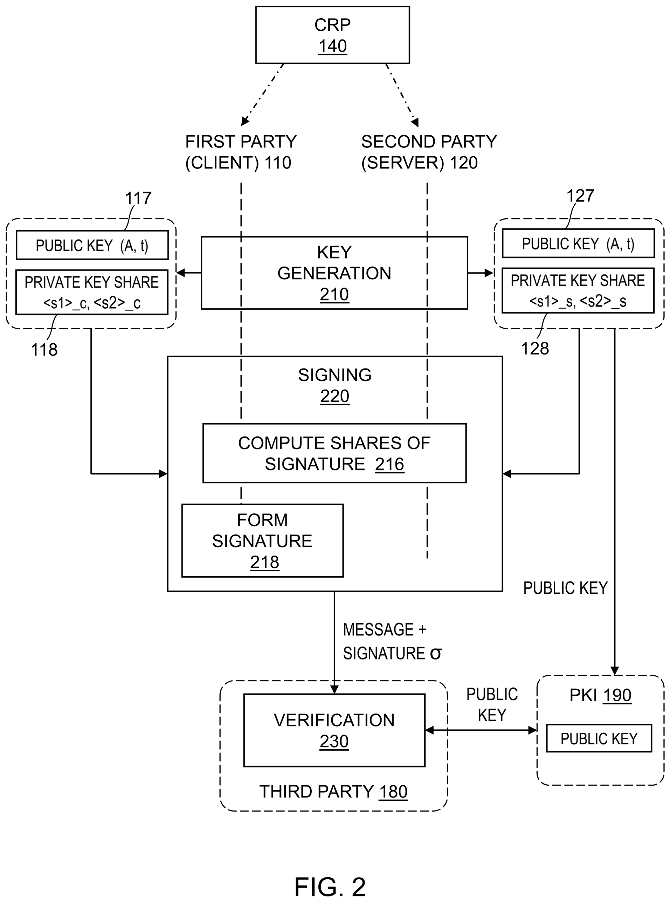

Figure 2 shows another example of a system architecture for implementing the method. There are many users who would like to use their not-too-secure devices (e.g. client devices 110, such as smartphones) to securely sign documents and/or authenticate themselves to third parties 180. In this method, the signing uses an ML-DSA algorithm which is jointly performed by a first party (client device 110) and a second party (server 120). The server 120 is a service provider for "a party in threshold signing". The user 110 contacts the service provider 120, and they jointly execute the key generation protocol 210. This generates secret shares 118, 128 of a private key for ML-DSA. The client device 110 stores their private key share 118 and the server 120 stores their private key share 128 of this jointly generated key. The client device 110 and server 120 also each learn the corresponding public key 117, 127. The overall system also includes a Public Key Infrastructure (PKI) 190. In this simplified system the PKI is shown as a single entity 190. In reality, the PKI comprises a plurality of separate entities. The PKI 190 stores the public key corresponding to a client device 110. Third parties 180 can obtain the public key for a client device from the PKI 190 and authenticate the client 110. The client device 110 (probably with help of the service provider 120) will make use of the PKI 190 to distribute a statement that their public key 117 is the one that they just created. The client device 110 and the service provider 120 will locally store their secret share of the private key; the service provider will make the note that this particular share corresponds to this particular client device 110.

Let the user have a value M that it wants to have signed. The value M may be a document or message for which the user wants to claim responsibility, or it may be a challenge from some party to whom the user wants to authenticate himself. The user uses his client device to contact the service provider and tell him the value M, too. After the service provider 120 has been notified, both the user (using their client device 110) and the service provider 120 agree to sign the value M. They will jointly execute the signing protocol 220. Each of the parties computes a share of the digital signature. Both parties, or perhaps only one of them, will learn the corresponding signature $\sigma$ that the signing protocol outputs. In this example, the first party forms the signature (block 218) by combining the first party share of the digital signature and the second party share of the digital signature. In alternative arrangements, the second party forms the signature (block 218) by combining the first party share of the digital signature and the second party share of the digital signature. The forming at block 218 may additively form the signature from the first party and second party shares.

Now consider a third party 180 holds both the value M and the signature $\sigma$, together with the claim that the signature has been created by the client device 110. This party 180 will use the PKI 190 to look up that user's public key. It will be an ML-DSA public key. The party will use the ML-DSA verification algorithm 230 to check the signature $\sigma$ on the value M. The party 180 does not have to be aware that the public key (and the corresponding private key) was generated with the two-party key generation protocol 210, or that the signature was generated with the two-party signing protocol 220. To the third party 180 it is just an ML-DSA signature.

As explained above, the client 110 and the server 120 work together during the key generation protocol 210 and the signing protocol 220. The manner in which the devices cooperate is a form of multiparty computation (MPC). This a branch of cryptography that deals with the design and analysis of algorithms that allow multiple parties to compute a function over their inputs while keeping those inputs private. In this method, two-party computation allows the client 110 and the server 120 to create ML-DSA signatures without either party possessing all of the corresponding private key. Each of the parties 110, 120 only has a share of the private key, which is kept secret from the other. This helps to improve security of the signature scheme. Various MPC techniques are used in this method. These include the technique of secret sharing, which involves distributing a secret value among multiple participants, such that no participant can recover the shared value without cooperation from another party (or parties). A straightforward example of secret sharing is additive sharing. A secret value is divided into two secret shares which, together, sum to the secret value. Each party which holds a secret share may perform various linear operations locally. These operations include: addition; multiplication; and constant introduction.

In the system of Figure 2, the client device 110 and server 120 can proceed directly to the signing protocol 220 if keys have already been generated by the pair of parties 110, 120. The signing protocol may be performed on many occasions using the same keys.

Figure 2 also shows a third party called a Correlated Randomness Provider (CRP) 140. The CRP will be described in more detail below.

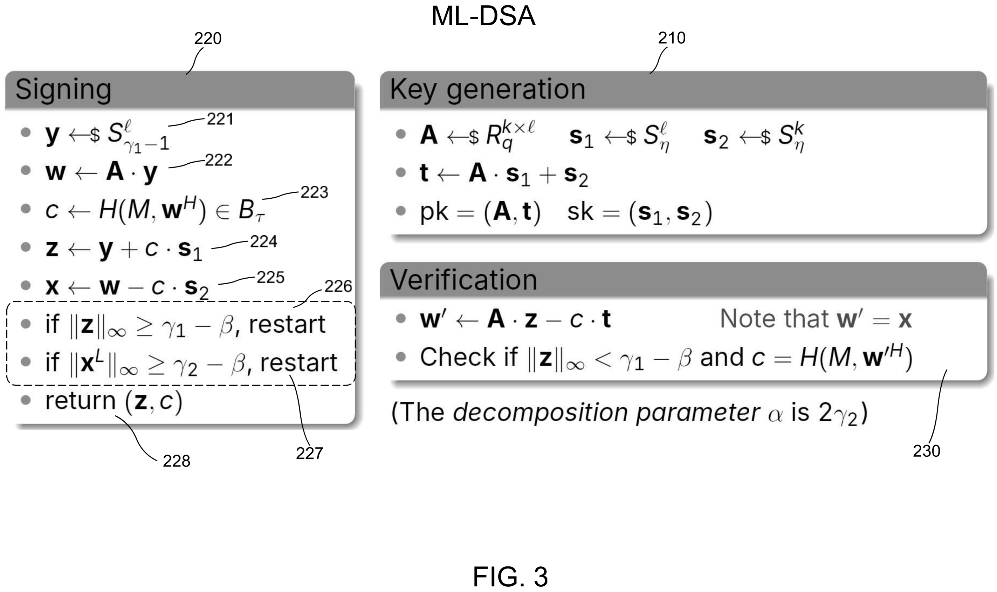

Figure 3 shows an overview of the ML-DSA signature scheme. The actual ML-DSA scheme includes some additional post-processing steps on the basis of public values which are omitted for clarity. The key generation procedure is shown in box 210. It begins by randomly generating a matrix $\mathbf{A}$ and two vectors $\mathbf{s\_1}$ and $\mathbf{s\_2}$ with such dimensions that the computation of $\mathbf{A} \cdot \mathbf{s\_1} + \mathbf{s\_2}$ is possible. The actual dimensions are given in Table 1 in NIST FIPS 204. The elements of the matrix and the vectors are polynomials of degree at most 255, where the coefficients are taken modulo q. The arithmetic with the polynomials happens modulo the polynomial $X^{256}+1$. The elements of matrix $\mathbf{A}$ are arbitrary polynomials, while the elements of the vectors $\mathbf{s\_1}$ and $\mathbf{s\_2}$ are restricted: their coefficients must lay between $-\eta$ and $\eta$, where the value $\eta$, is very small. ML-DSA have a value of $\eta = 2$ or 4. After generating $\mathbf{A}, \mathbf{s\_1},$ and $\mathbf{s\_2},$ a matrix-vector multiplication is performed to obtain the vector t of length k. The public key pk is defined as **(A, t)** and the private key sk is defined as **(s_1, s_2)**. ML-DSA has a value of q = 8380417.

The signing procedure 220 (for a message M) is shown in box 220. It begins at step 221 by generating a random vector of polynomials **y** of length l, where the coefficients are restricted to lay between $-\gamma_1$ and $\gamma_1$-1.

At step 222, **w** is computed as a matrix-vector product **A·y**. The matrix **w** comprises a set of elements with coefficients. The method computes the *high bits* of the coefficients of the elements of **w.** Let the vector of the high bits be denoted $\mathbf{w^H}$.

The next step 223 computes a hash of the message together with the high bits $\mathbf{w^H}$, and obtains a "challenge" c. The hash function, defined in NIST FIPS 204, is such that the challenge c is a single polynomial (of degree at most 255). The coefficients of c come from the set {-1,0,1}. Among the 256 coefficients of c, there are exactly $\tau$ non-zero coefficients. Next, the elements of the vector **s_1** are multiplied with the value c, and the resulting vector is added to the vector **y.** The resulting vector (of length l) of polynomials is called **z.**

At this point, the signature **(z,** c) has been computed. But, if it is output it may leak something about the private key, because it might be the case that not all possible values of $s_1$ and $s_2$ are consistent with the values **z** and c and the way in which **y** was sampled. On the other hand, it may also be the case that nothing is leaked when we output **(z,** c). Steps 226 and 227 implement checks to ensure that nothing is leaked. Coefficients of all polynomials in **z** should lie between $-\gamma_1$+B+1 and $\gamma_1$-B-1. The low bits of the coefficients of all of the polynomials in the vector **x** (of length k) should lie between $-\gamma_2$+$\beta$+1 and $\gamma_2$-$\beta$-1. If these checks pass, then it is safe to publish the signature **(z,** c) at step 228.

The ML-DSA verification scheme is shown in box 230. Verification uses the public key (A, t) and the received signature and performs checks on the values of z and c.

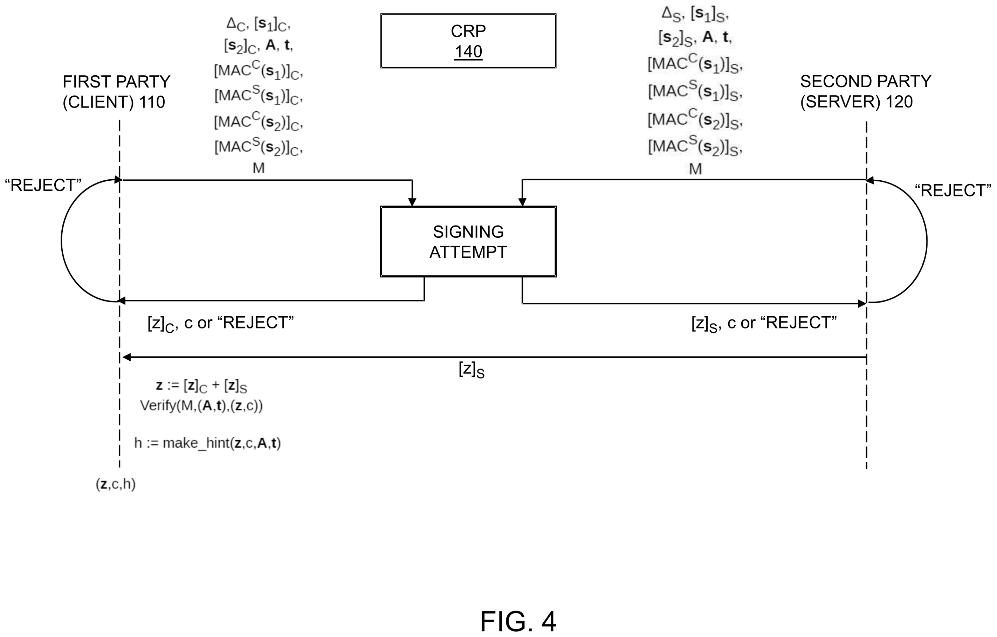

Figure 4 shows an overview of the signature protocol implemented by the parties 110, 120. The client 110 and server 120 each hold the to-be-signed message M, the public key (A,t), and their individual shares of additively shared private key **(s_1, s_2),** where the modulus of sharing is q defined in the ML-DSA specification. The parties collaboratively, and with the assistance of a Correlated Randomness Provider (CRP) 140, compute the signature on M, by performing the steps of the ML-DSA signature algorithm mostly under secure two-party computation protocols, obtaining the additive shares of the signature in the end, while leaking to each other or to third parties nothing about the private key.

At the end of a signing attempt, the client 110 may receive the client share [z]_c of the signature and c. Alternatively, it may receive a rejection and begin a new signing attempt. Similarly, at the end of a signing attempt, the server 120 may receive the server share [z]_s of the signature and c. Alternatively, it may receive a rejection and begin a new signing attempt. A successful signing attempt may also deliver the server share [z]_s of the signature and c to the client 110. The client 110 combines [z]_c + [z]_s and verifies the signature. To protect against a potentially deviating server, the signature z is first declassified only to the client 110. Only after successfully locally verifying the signature, the client 110 sends the signature to the server 120.

The functionality of the first party device 110 and the second party device 120 is symmetrical for much of the method.

Figure 4 shows the parties sending data with control values, called Message Authentication Codes (MAC). The MAC codes provide some assurance that a party sending a message has not tampered with it. Parties 110, 120 communicate with each other, such as when sending shared values. Additively sharing a value does not provide protection against a potentially malicious party modifying their share. If any share of a shared value is tampered with, the output of a protocol that relies on it may be incorrect. In some cases, the output may be unsafe to reveal, as it could expose information about the secret material, which is not allowed. Therefore, to achieve security against a potentially malicious party, a certain mechanism is required that allows the other party to verify that the share it receives from the potentially malicious party is correct. A way of achieving this is through the use of "control values" that are revealed simultaneously with the share, the correctness of which they allow verifying. Such "control values" bear similarity to Message Authentication Codes (MACs); due to historical reasons, they are often referred to by the same label. One suitable form of MAC codes are called BeDOZa style MACs. They are described in "Semi-Homomorphic Encryption and Multiparty Computation", Rikke Bendlin et al., Advances in Cryptology - EUROCRYPT 2011 - 30th Annual International Conference on the Theory and Applications of Cryptographic Techniques, Tallinn, Estonia, May 15-19, 2011.

For a value v, these MACs are the values of form $\Delta\_s \cdot$ [v]_c (which will be called a Server MAC) and $\Delta\_c \cdot$ [v]_s (which will be called a client MAC). These values are additively shared between the parties. The $\Delta$ value is selected (generated) by a party from the same ring as the value v and is known only by that party and the CRP 140. Due to certain security considerations stemming from the security proofs for the properties of BeDOZa style MACs, the ring of a $\Delta$ value must necessarily be a field. Therefore, only values shared in fields can be MACed.

A quantity <v>_c is a triple consisting of: the client's share [v]_c of the value v, the client's share of the client MAC on v; and the client's share of the server MAC on v. <v>_s is defined analogously.

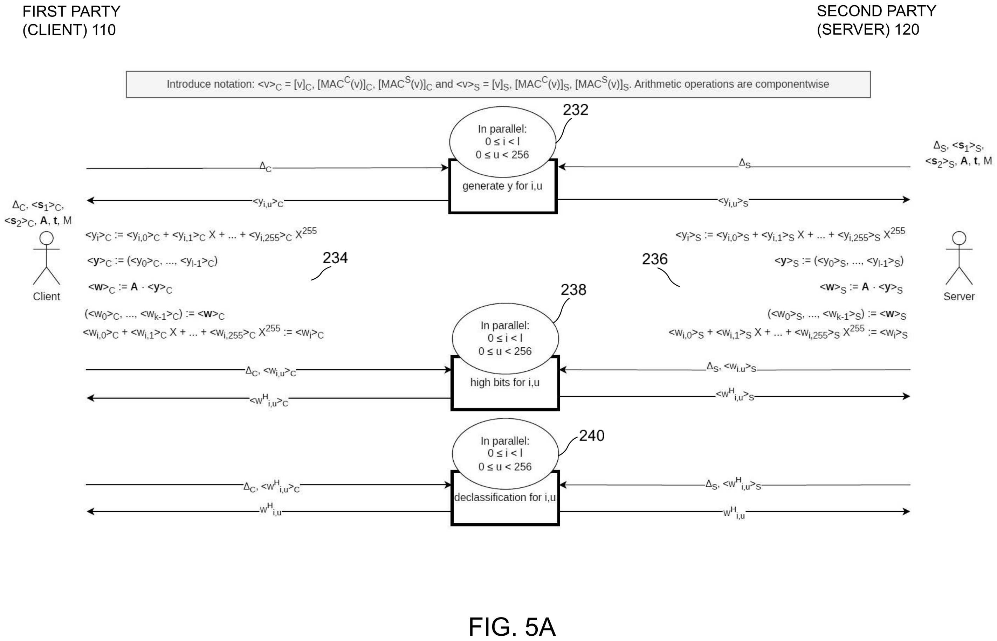

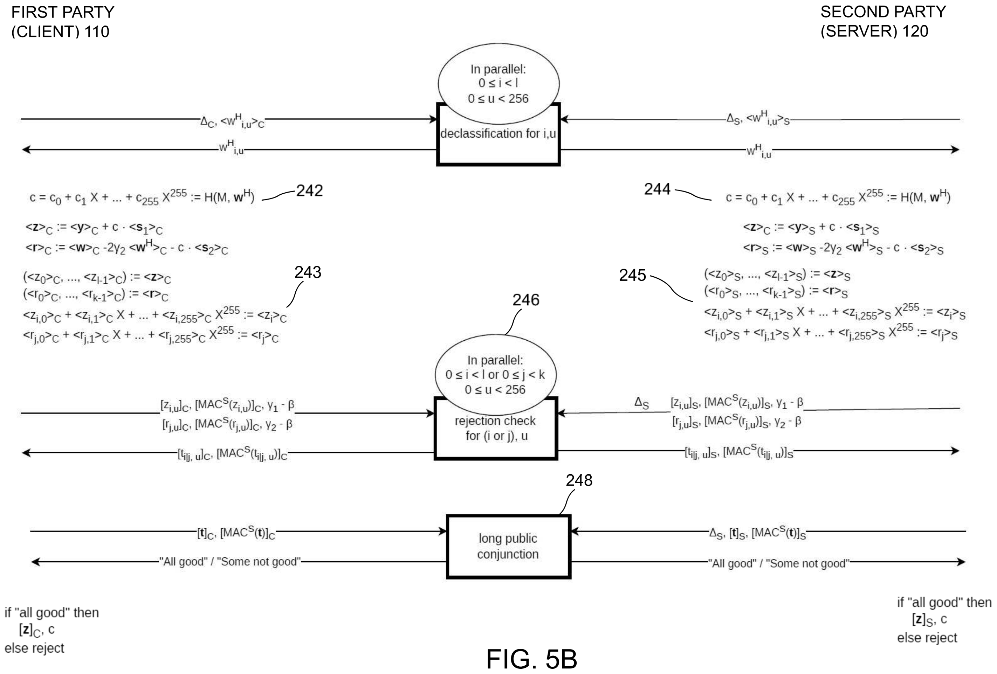

Figures 5A and 5B show an overview of a signing attempt of the signature protocol implemented by the parties 110, 120. This shows a way of implementing the ML-DSA signing procedure 220 of Figure 3 by two parties 110, 120. Parts of the protocol are shown as boxes (e.g. 232, 238, 240) and are described in more detail in subsequent drawings. Each of the parties 110, 120 operates on secret-shared values. At some points of the protocol there is communication between the parties 110, 120. At some points, the parties exchange their own secret shares of a value, to determine a combined value. However, during most of the method, the parties 110, 120 operate on their own secret shares, without communication with the other party.

At block 232, the client 110 and server 120 begin by generating a vector of polynomials y. The coefficients of the polynomials are additively shared with the modulus q, but each coefficient belongs to a smaller range, the size of which is a power of two. They generate each coefficient by invoking well-known protocols for generating random bits, and computing the coefficients as linear combinations of those bits. This block implements step 221 of Figure 3.

At blocks 234 and 236 the parties 110, 120 compute the secret-shared value $\mathbf{w} = A\mathbf{y}$. $\mathbf{w}$ is a matrix of polynomials with coefficients. This block implements step 222 of Figure 3. It can be seen that the client 110 and server 120 each implement the same functionality, but using their own secret share. For example, in block 234 the client 110 operates on a client share <y>_c of the secret-shared vector y. Similarly, in block 236 the server 120 operates on a server share <y>_s of the secret-shared vector y.

Blocks 238, 240 determine the high bits $\mathbf{w}^H$ of the coefficients of the matrix $\mathbf{w}$. This task is more difficult to implement between two parties with secret-shared values, compared to a single party. For the client 110, block 238 operates upon the client's share of the matrix $\mathbf{w}$, <w>_c, and returns its share of the high bits of the matrix $\mathbf{w}$. For the server 120, block 238 operates upon the server's share of the matrix $\mathbf{w}$, <w>_s, and returns its share of the high bits of the matrix $\mathbf{w}$. Block 240 combines the two shares of high bits values into a combined high bits value $\mathbf{w}^H$. This part of the method works without the client or server ever knowing the full matrix $\mathbf{w}$.

To compute the high bits of a secret-shared value w, the client and server use a protocol that splits either w or w+Q (randomly chosen) into its digits according to a mixed-radix basis. The digits are represented as secret-shared characteristic vectors. By choosing the basis, the high bits can be computed almost as a linear combination of the bits in the characteristic vectors, with the non-linear part being an equality check. The splitting of w into digits is done with the help of the Correlated Randomness Provider that has distributed the secret shares of a random value and its split into digits. This part of the protocol provides security for the client against a server that may want to deviate from the protocol, and similarly, to the server against a potentially deviating client. The deviations are caught by the MAC codes.

At block 240 the client and server declassify the high bits of $\mathbf{w}$. Block 240 outputs a value $\mathbf{w}^H$ which represents high bits of both shares (client share <w^H>_c, server share <w^H>_s) of $\mathbf{w}$. The client and server each receive $\mathbf{w}^H$.

Blocks 242 and 244 use the high bits of $\mathbf{w}$ and M as the arguments to a hash function, obtaining the challenge c. These blocks implement step 223 of Figure 3.

Blocks 242 and 244 also compute the secret shares of the values $\mathbf{z} = \mathbf{y} + c\mathbf{s}_1$ and $\mathbf{x} = \text{lowbits}(\mathbf{w}) - c\mathbf{s}_2$. This computation is a linear combination of secret-shared values that the parties already have. These blocks implement steps 224, 225 of Figure 3.

The values $\mathbf{z}$ and $\mathbf{x}$ are then compared against constants as part of the rejection checks in block 246.

The comparison of a secret-shared value z against a bound B is again performed by a comparison protocol, the outer structure of which follows an existing protocol that computes the overflow bits of z and (z-B), and combines them into the comparison result. The overflow bit indicates, whether the two shares of z, held by the client and the server, sum up to z or to z+Q.

To compute this overflow bit, client and server again split z into smaller digits, using the random values obtained from the CRP.

If the rejection checks pass, then the signature $\mathbf{z}$ (the other component, c, is already known) is declassified. The existing protocol works under the assumption that neither the Client nor the Server deviate from it. The rejection check of box 246 assumes that the server does not deviate from the protocol between the parties, i.e. if the server chooses to deviate, then it will not be caught. The protocol does not allow the client to deviate. As the rejection check of box 246 has the property of not catching a deviating server, the Long public conjunction of box 248 is also configured not to catch the deviating server.

Referring again to Figures 5A and 5B, the overall method can be viewed as comprising: a first phase; a challenge computation; a second phase, and final checks, where:

in the first phase, the protocol produces some secret-shared data and some public data. The first phase comprises generating the masking vector 232 and high bits 238;

the challenge computation 242, 244 takes the public data from the first phase and the message M, and applies a hash function to them to produce c;

the second phase takes the secret-shared data from the first phase, the challenge c, and the share of the private key, and produces [z]_c. It then receives [z]_s and computes z;

in final checks, the client verifies that (z,c) is a good signature to message M, and if not, will destroy its private key shares.

It has been found that it is sufficient to make the rejection checks 246 actively secure against only one of these parties. Against the other party, passive security is sufficient. Here "passive security" actually means "active privacy", i.e. if the party deviates from the protocol, then the result may be wrong, but the party will not learn the secrets, as long as the result has not been opened. Having active security against only one of the parties makes the protocols simpler. For example, there is less communication.

The protocol adds protection against a potentially deviating client, again using homomorphic MACs.

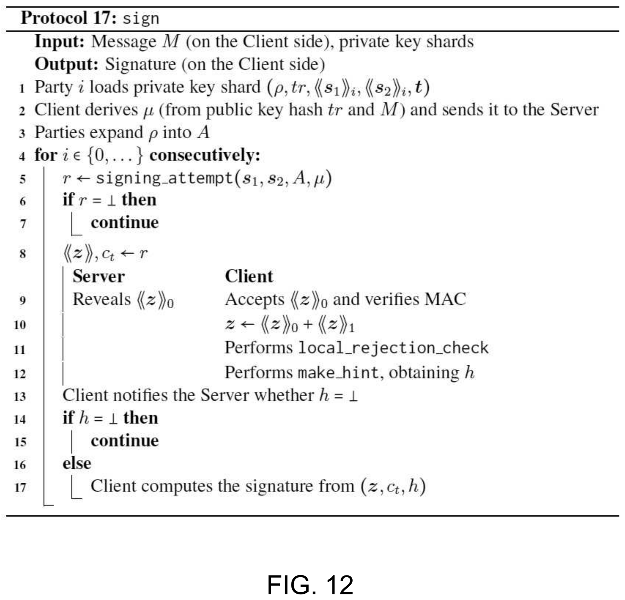

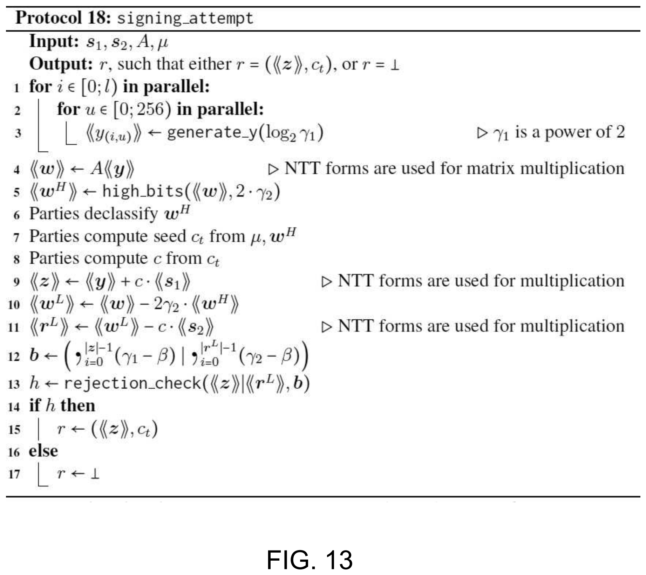

An example protocol for signing is shown in Figure 12. An example protocol for a signing attempt is shown in Figure 13.

Note that in the protocol shown in Figure 13 [Protocol 18] $\mu$ is the only value that depends on the message. It is used for the first time on line 7. Therefore, the signing process may be reorganized such that the high bits protocol and the $w^H$ declassification are performed as a precomputation, perhaps in parallel with the execution of rejection check from a previous signing attempt, or perhaps during times of lesser network and server load (such as at night). Also, multiple signing attempts could be conducted in parallel.

Some of the stages of the method will now be described in more detail.

**High bits protocol**

The ML-DSA scheme defines the "high bits" of the coefficients of the matrix w as:

$$v^H := \begin{cases} \left\lfloor \frac{(v+\alpha/2-1) \bmod Q}{\alpha} \right\rfloor. & \text{if } (v + \alpha/2 - 1) \not\equiv -1 \pmod{Q} \\ 0. & \text{if } (v + \alpha/2 - 1) \equiv -1 \pmod{Q} . \end{cases}$$

where:

$$v \in \mathbb{Z}_Q = \{0, 1, \ldots, Q-1\}$$

and where the modulus $Q = 2^{23} - 2^{13} + 1 = 8\,380\,417$.

Let us note that $Q - 1 = 2^{23} - 2^{13} = 2^{13} \cdot 3 \cdot 11 \cdot 31$.

The ML-DSA parameter $\alpha$ has a value $\alpha = 190\,464 = (Q-1)/44$ (for ML-DSA-44) and $\alpha = 523\,776 = (Q-1)/16$ (for ML-DSA-65 and ML-DSA-87). The remainder of this section will use $\alpha = 190\,464$. So, the first thing to compute the high bits of v, is to compute v' := (v + $\alpha$/2 - 1) mod Q, and then $\lfloor v'/\alpha \rfloor$, unless v' = Q-1 (this case has to be handled separately).

In the example below, the high bits of v = 2 000 000. According to the definition, the result should be 11. Indeed, we have v' = 2 095 231 and v'/$\alpha$ = 11+127/190 464.

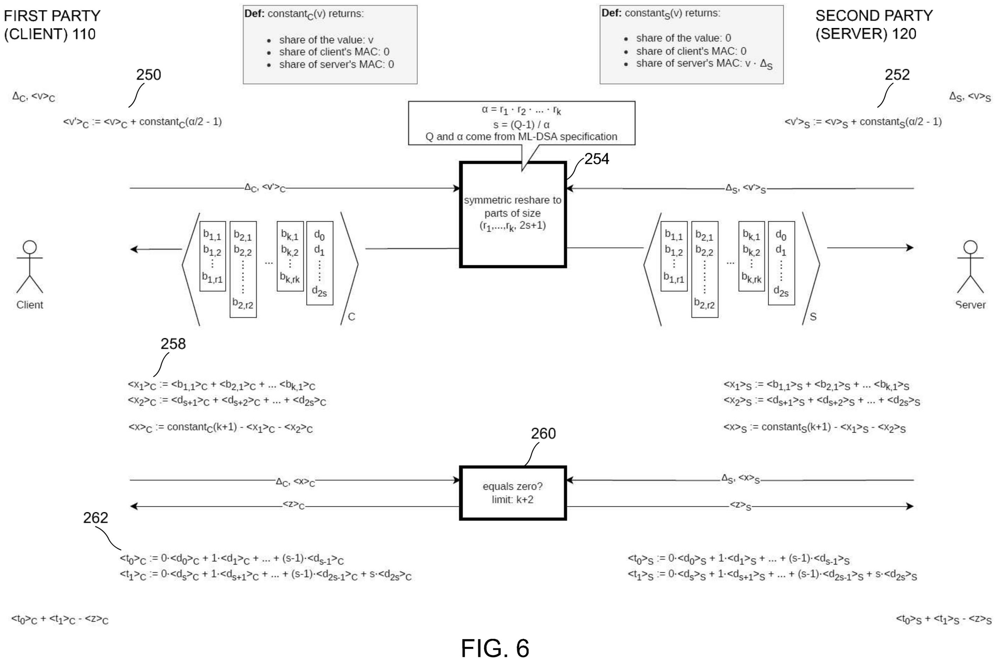

Figure 6 shows an overview of the high bits protocol of the signature protocol implemented by the parties 110, 120. Each party holds a share of the coefficient values in the matrix **w.**

We chose v = 2 000 000, meaning that v is the actual value that would be obtained when summing the client share of v, <v>_c, and the server share of v, <v>_s. The shares <v>_c and <v>_s sum to 2 000 000 modulo Q. For example, they could be: <v>_c = 2 000 000 and <v>_s = 0; or <v>_c = 1 500 000 and <v>_s = 500 000; or <v>_c = 5 000 000 and <v>_s = 5 380 417.

So, the first thing is to define v' by adding $\alpha$/2 - 1 to v (and taking "mod Q", which is "automatic" for secret-shared values). This is shown in blocks 250, 252. We already computed that v' = 2 095 231. We now have to split it into digits according to the radix basis (r1, ... , rk, 2s + 1). A subprotocol "symmetric reshare to parts" 254 performs the split into digits.

The radix basis is (31, 24, 16, 16, 89), where the leftmost number is the size of the least significant digit. In this example, k = 4 and s = 44. With this basis, the values of the digits are:

$$(1, r1, r1*r2, r1*r2*r3, r1*r2*r3*r4) = (1, 31, 744, 11\,904, 190\,464).$$

The split of v' into digits is:

$$(b1, b2, b3, b4, d) = (3, 4, 0, 0, 11).$$

The least significant digit is the leftmost. Indeed, v' = 11 · 190 464 + 4 · 31 + 3.

The "symmetric reshare to parts" protocol 254 may give the split of v' to digits. But it may also give the split of v' + Q to digits. We have v' + Q = 10 475 648 and its split into digits is:

(4, 4, 0, 0, 55).

The "symmetric reshare to parts" subprotocol 254 returns not just the digits, but the characteristic vectors of these digits. In this example, it gives five vectors of length: 31, 24, 16, 16, 89, respectively, where each vector has one element "1", the rest of the elements "0", and all elements are additively shared modulo Q between the client and the server. Using these vectors, any function applied to a single digit is now a linear function, and can be evaluated by the client and the server with no further communication between them.

A characteristic vector of a value x, where the possible range of x is from 0 to (R-1), is a vector v of length R. All elements of v are equal to 0, except for v[x], which is equal to 1. For example, if x=5 and we have somehow fixed that the possible values of x belong to the range 0 ... 9, then the characteristic vector v of x is:

$$(v[0], v[1], ... v[9]) = (0, 0, 0, 0, 0, 1, 0, 0, 0, 0)$$

We see that if we have the split of v' into digits, then the value $v^H$ is basically d. If we have the split of v' + Q into digits (b1, b2, b3, b4, d), then we first should subtract Q from it. The subtraction usually gives us (b1 - 1, b2, b3, b4, d - 44), meaning that the value $v^H$ is d - 44.

We can combine these two cases into "if d < 44 then d else d - 44". This general rule can be evaluated without any further communication between the Client and the Server; the result is again secret-shared. Using the notation in Figure 6, the general rule is evaluated by computing t0 + t1. There are some exceptions, though.

One exception is, that if d ≥ 44, i.e. we have split v' + Q into digits, then in the case the split is (0, 0, 0, 0, d), where d ≥ 45 then we should not return d - 44, but d - 45. Indeed, we should subtract Q, which leaves us with (30, 23, 15, 15, d - 45), and then return the most significant digit.

Another exception is the case v' = Q - 1. In this case, the split into digits is (0, 0, 0, 0, 44); we will see later that in this case it is impossible to get the split of v'+Q out of the "symmetric reshare to parts" protocol. Actually, this case is not an exception: for this case, our general rule "if d < 44 then d else d - 44" works. The correct answer is 0 and the rule also returns 0. For the "major exception" above, we can compute a value that indicates when this exception occurs. This value is:

$$x = (b_1 \overset{?}{=} 0) + (b_2 \overset{?}{=} 0) + (b_3 \overset{?}{=} 0) + (b_4 \overset{?}{=} 0) + \sum_{i=45}^{88} (d \overset{?}{=} i) \ .$$

Here all these checks of whether a digit is equal to a particular value, can be read from the characteristic vectors of these digits. The exception occurs exactly in the case when all five addends (the last one of which is a sum, in which at most one element can be equal to 1) are equal to 1; the possible values of x are {0, 1, 2, 3, 4, 5}. We use the "equal to zero" protocol to find the value z indicating whether 5 - x is equal to zero. We subtract z from the result given by our general rule.

From the above, the output of the high bits protocol is mostly computed according to this "general rule": "if d < 44 then d, else d-44".

Let gr(d) denote this "general rule" function applied to d.

If the client and server just had the shares of d, then they could not compute the shares of gr(d) without communicating with each other, because "gr" is not a linear function. But if the client and the server have the shares of the elements of the characteristic vector D of d, then they can compute the shares of gr(d) without communicating with each other. Indeed:

$$gr(d) = D[1] + 2*D[2] + 3*D[3] + ... + 43 * D[43] + D[45] + 2*D[46]$$

$$+ 3*D[47] + ... + 43*D[87] + 44*D[88]$$

This is a linear function in D[0], D[1], ..., D[88].

Block 258 of Figure 6 defines the values x1, x2, and x as certain linear combinations of the values b_{i,j} and d_i. The linear combinations can be computed without communication between the client and the server. These computations are performed on linear combinations of bits of the characteristic vectors. The server performs the same computations as the client, but with the <...>_S shares. So, the operations are:

$$x1 = b_{1,1} + b_{2,1} + ... + b_{k,1}$$

$$x2 = d_{s+1} + d_{s+2} + ... + d_{2s}$$

$$x = k+1 - x1 - x2$$

We call the subprotocol "equals zero?" (block 260) with the secret-shared value x. Block 260 returns the value z, which is either 0 or 1, and it is also secret-shared. Block 262 computes some more linear combinations:

$$t0 = d\_1 + 2*d\_2 + 3*d\_3 + ... + (s-1) * d\_\{s-1\}$$

$$t1 = d\_\{s+1\} + 2 * d\_\{s+2\} + 3 * d\_\{s+3\} + ... + s * d\_\{2s\}$$

These computations are also performed on linear combinations of bits of the characteristic vectors. The final step in block 262 is to compute another linear combination:

$$t0 + t1 - z.$$

This quantity is equal to the high bits of the input v.

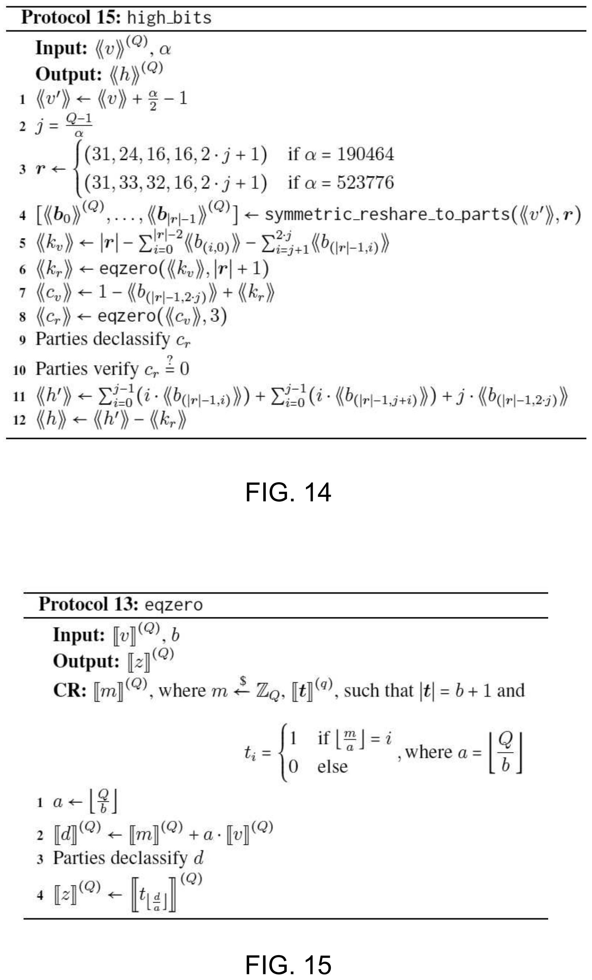

An example protocol for high bits is shown in Figure 14.

Note that the value $w^H$ is declassified during the protocol execution. We believe that this is not a security concern. Briefly:

- The value $w^H$ itself does not depend on (s1, s2), so it initially can be revealed.
- Value w depends on y, but $w^H$ does not computably depend on y. Thus, even though z and $r^L$ depend on (s1, s2) and y, revealing $w^H$ alongside (before) h does not reveal more information about (s1, s2) and y than revealing h alone.
- If the rejection check passes, ML-DSA hardness assumptions imply that the signature is safe to reveal. Since $w^H$ can be obtained from the public key and the signature with negligible computational effort, it is safe to reveal $w^H$ alongside (before) z.

**Symmetric reshare to parts protocol**

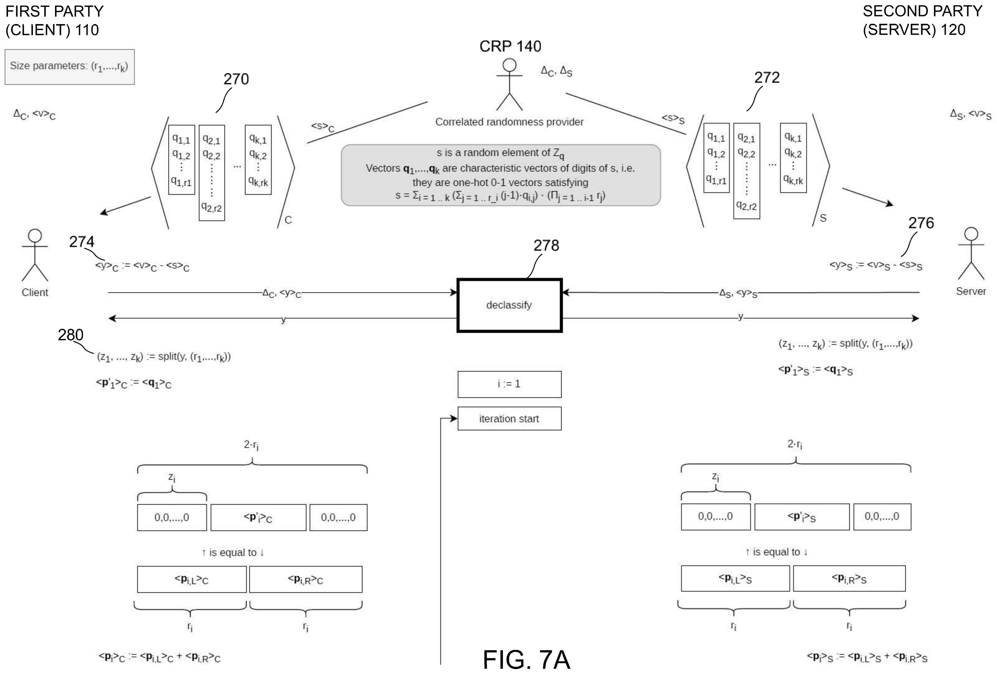

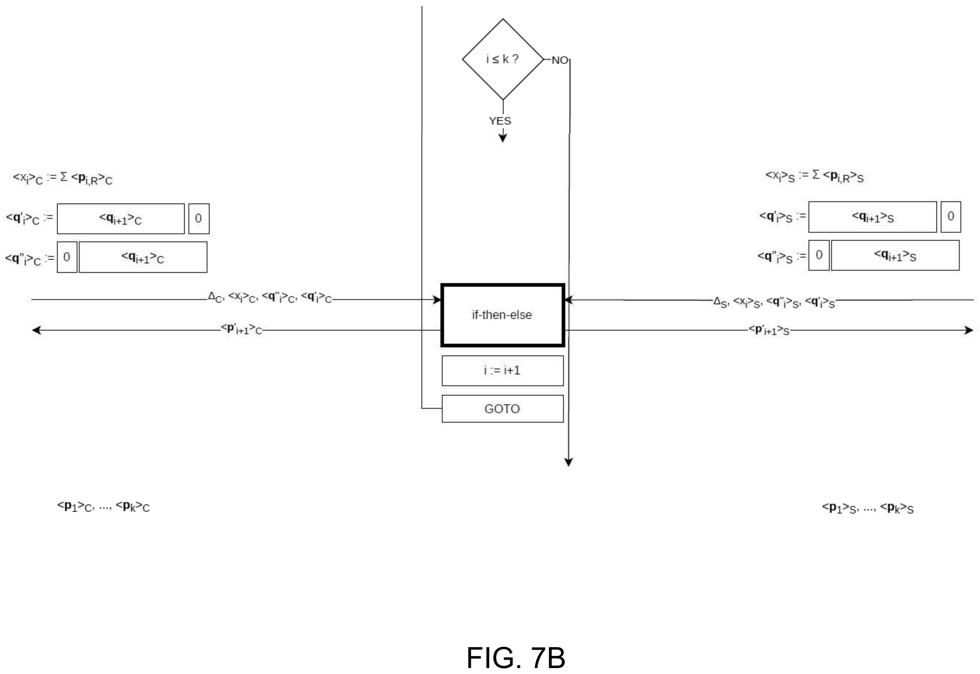

Figures 7A and 7B show the symmetric reshare to parts protocol. The structure of this protocol is something that is used in MPC protocols: if we have a secret-shared value v, and want to compute a secret-shared value f(v), then we somehow obtain (e.g. from the Correlated Randomness Provider) a secret-shared random value s and the corresponding secret-shared f(s). We declassify y = v-s, and perform computations with f(s) and y to obtain f(v). The function f must be "sufficiently homomorphic" for this protocol structure to work. It turns out that the "symmetric reshare into characteristic vectors of digits" function is sufficiently homomorphic.

Let us continue with the same example. Let the radixes be:

$$(r1, r2, r3, r4, r5) = (31, 24, 16, 16, 89),$$

and the number to split into parts be v = 2 095 231. We also have some (correlated) randomness from the Correlated Randomness Provider. The CRP 140 begins with a random value s which is split between a client share of s and a server share of s. Each share is split into digits, and the digits are expanded into characteristic vectors (CV) 270, 272. The client share of CVs is 270 and the server share of CVs is 272. In Figure 7A, the client 110 has received from CRP 140 the client's share of the CVs of the digits of s. The client has received its shares of the vectors q_1,...,q_k. In these vectors, the element q_{i,j} indicates whether the i-th digit of s is equal to (j-1). The client does not have q_{i,j}. It has its *share* of q_{i,j}.

Let us choose randomly s = 4 809 829. Its split into digits is (24, 19, 0, 4, 25). We can verify this:

$$25 \cdot 190\ 464 + 4 \cdot 11\ 904 + 19 \cdot 31 + 24$$

$$= 4\ 761\ 600 + 47\ 616 + 589 + 24 = 4809829.$$

In the protocol, we now compute y = v - s; this computation is modulo Q. We get:
y = 2 095 231 - 4 809 829 = -2 714 598 ≡ 5 665 819 (mod Q).

The value y is declassified, and both the Client and the Server split it into digits. They find that the digits of y are (11, 8, 15, 11, 29).

We now have digits of s (secret-shared) and digits of y (known to both the Client and the Server), and want to find the digits of v = y + s. Actually, in our case, y + s is not equal to v. In our case, y + s is equal to v + Q. We see that if s > v, then y +

$s = v + Q$. If $s \leq v$, then $y = (v - s) \bmod Q = v - s$ and $y + s = v$. This is where the randomness of the result of "symmetric reshare to parts" comes from.

We have the digits (24, 19, 0, 4, 25) of s and the digits (11, 8, 15, 11, 29). In the protocol, we simply perform the addition of multi-digit numbers:

1. Add 24 and 11. The result is 35. As the radix was 31, then the digit of the result is 4 and the carry is 1.
2. Add 19 and 8, also add the carry 1. The result is 28. As the radix was 24, then the digit of the result is 4 and the carry is 1.
3. Add 0 and 15, also add the carry 1. The result is 16. As the radix was 16, then the digit of the result is 0 and the carry is 1.
4. Add 4 and 11, also add the carry 1. The result is 16. As the radix was 16, then the digit of the result is 0 and the carry is 1.
5. Add 25 and 29, also add the carry 1. The result is 55. The radix is 89, hence there is no carry here.

The result is (4, 4, 0, 0, 55). Having the digits of s represented as characteristic vectors, and the digits of y known to both the client and the server, makes the additions of digits, and carryings quite straightforwardly implementable. This is depicted in Figures 7A and 7B. The addition is the shift by zi positions, where zi is the i-th digit of y. Adding the carry is the shift by 1 position. Choosing, whether to add the carry, is the if-then-else protocol.

This protocol uses:

the set of radixes: 31, 24, 16, 16, 89 for $\alpha = 190464$ and;
the set of radixes: 31, 33, 32, 16, 33 for $\alpha = 523776$.

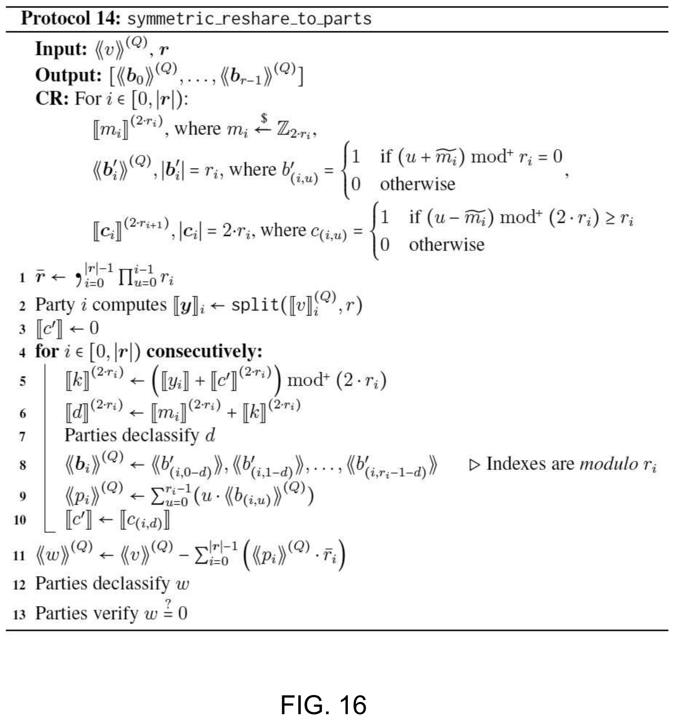

An example protocol, with some different details, is shown in Figure 16.

**Equals zero protocol**

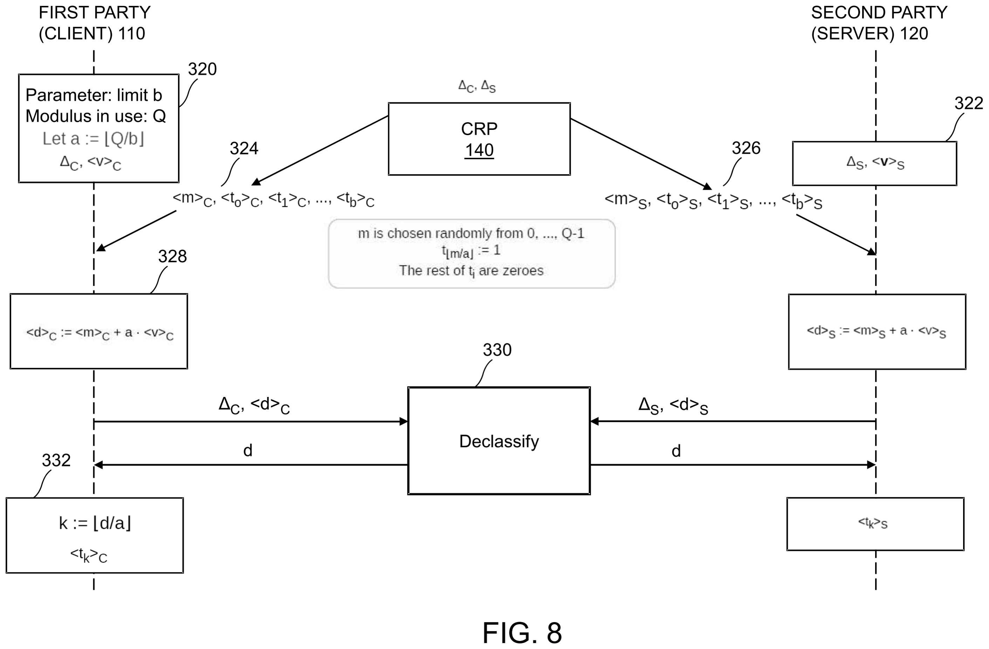

This is shown in Figure 6, block 260 and Figure 8. An input is a shared value <v>, and the sharing is over some modulus q. The output is a shared bit <b>. The sharing may be over a different modulus. Bit b is equal to 1 exactly when v is zero. The value v must be smaller than some (rather small) public bound B. If it is not then the output of the protocol is undefined.

The zero-equality protocol, from a shared value <v> and border value b obtains <z> such that:

$$z = \begin{cases} 1 & \text{if } v = 0 \\ 0 & \text{else} \end{cases}.$$

The protocol is functional only if the input condition is met: $v < b$. Compared to a zero-equality protocol that can be trivially derived from the characteristic vector protocol, the computational complexity and the CRP-to-Server traffic of the protocol discussed in this section grow linearly in b.

The specification of "equals zero" contains a parameter which is called "the limit" and denoted by "b". On the client side, the input to the protocol is a shared value of v, <v>_c. The protocol gives the correct output only if the input "v" to the protocol is strictly smaller than b. The outer protocol which calls the "equal zero" protocol should ensure that the input is between 0 and (b-1).

In the "high bits" protocol of Figure 6 the value x_1 (which is shared, such that the client has <x_1>_C and the server has <x_1>_S) is between 0 and k, because it is a sum of k bits, each of which may be 0 or 1. Hence the value x_1 is between 0 and k. The value x_2 is either 0 or 1, because it is the sum of a sub-vector of a one-hot vector. The value x is equal to (k+1) - x_1 - x_2, hence it is between 0 and (k+1). So, we use the limit (k+2) for the "equal zero" protocol. In an example implementation, k=4.

The "equals zero" protocol uses a modulus Q and a parameter "a" from the parameters Q and b. The input to the "equals zero" protocol is v. The CRP has generated a random value m and secret-shared it between the client and the server. The client and the server each compute their shares of $d := m + a * v$. This is a linear computation. The client computes with their shares. Symmetrically, the server computes with their shares.

The client and the server declassify the value d. Besides the random value m, the CRP has also secret-shared the characteristic vector of the value m/a (rounded down). I.e. the vector t of length 7 (indices run from 0 to 6) is the following:

If 0 <= m <= 1396735, then t = (1,0,0,0,0,0,0)

(continued)

| | | | | | | |
|---|---|---|---|---|---|---|
| If | 1396736 | <= m | <= | 2793591, then | t = (0,1,0,0,0,0,0) |
| If | 2793592 | <= m | <= | 4190387, then | t = (0,0,1,0,0,0,0) |
| If | 4190388 | <= m | <= | 5587183, then | t = (0,0,0,1,0,0,0) |
| If | 5587184 | <= m | <= | 6983980, then | t = (0,0,0,0,1,0,0) |
| If | 6983980 | <= m | <= | 8380416, then | t = (0,0,0,0,0,1,0) |

Both the client and the server have the value d, which was declassified. The value a is a parameter. So, the client locally computes k := d/a (rounded down). The server also computes the same k. And we use k to index into the vector <t>.

(So, our actual parameters are Q = 8380417, b = 6, and a = 1396736)

An example protocol is shown in Figure 15.

## Rejection check

This protocol performs the rejection checks, shown in Figure 3, 226, 227 and Figure 6 block 246. The inputs are the componentwise shared vectors [z] and [$x^L$], shared over the ML-DSA modulus q. The output is a public bit, indicating whether the checks were passed.

The MACs are used only by one of the parties (the server), providing this party the correctness guarantees. The other party (the client) will get privacy guarantees, but no correctness guarantees; the privacy guarantees also hold only as long as no declassified values are made known to the server. Both the correctness and the privacy for the client are recovered by the final verification, where the server sends [z]_s to the client, but the client will not immediately send [z]_c to the server. Only after the client is satisfied that certain check pass, will he send z (which, at this point, is functionally equivalent to [z]_c from the server's point of view) to the server.

The inequality check may be implemented as the "asymmetric reshare to parts" protocol, followed by two "overflow"s, followed by some arithmetic.

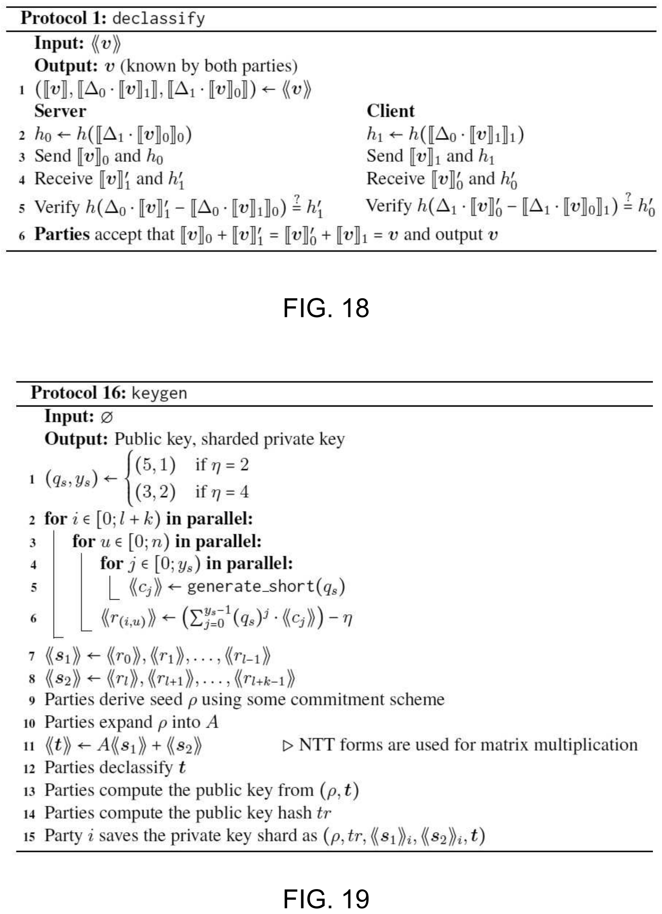

An example protocol is shown in Figure 18.

## Declassify

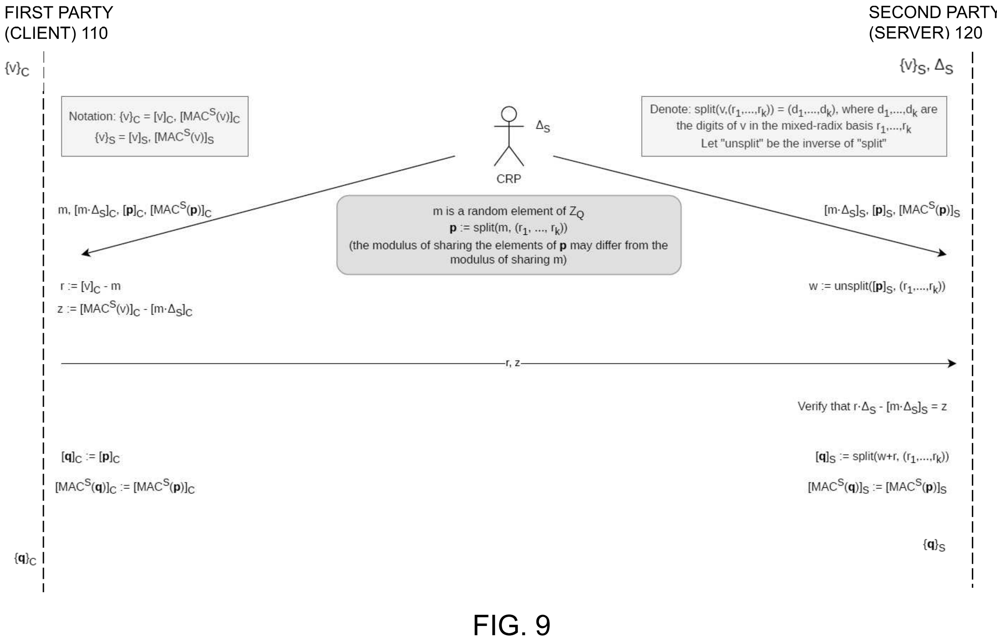

Figure 9 shows a declassify protocol. This is shown in block 240 of Figure 5A, block 278 of Figure 7A and block 330 of Figure 8. The client 110 sends a value and a hash .

The declassify protocol is used to declassify (mutually reveal the value of) a vector of shared values. Note that a party accepts the shares of another party only if it also receives the hash value that is consistent with the correct MAC value for the received shares. The honest party aborts the protocol execution (and deletes the secret material) if the security check (on line 5, Protocol 1) enabled by the use of MACs, fails. The protocol can be modified to reveal the value to only one of the parties, or to declassify a value that does not have MACs.

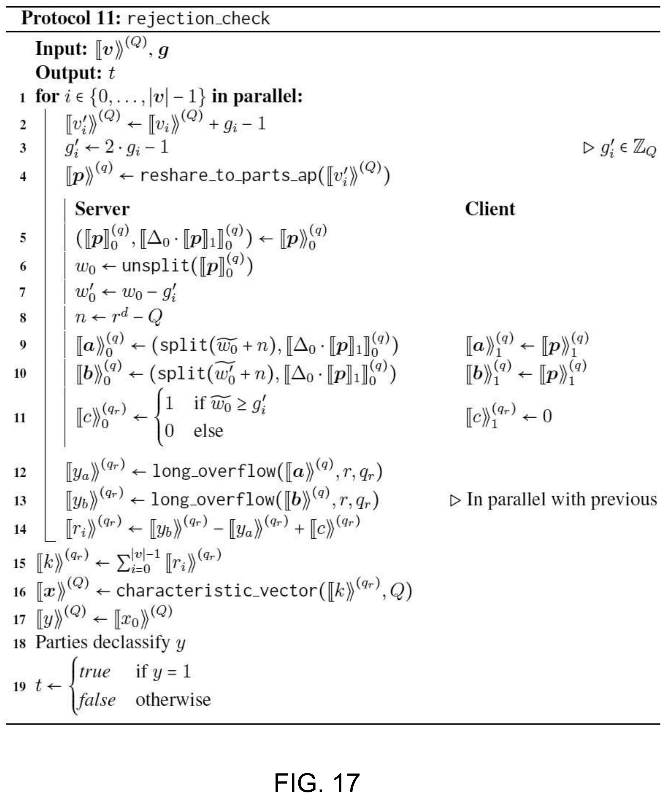

An example protocol is shown in Figure 17.

## Asymmetric reshare to parts protocol

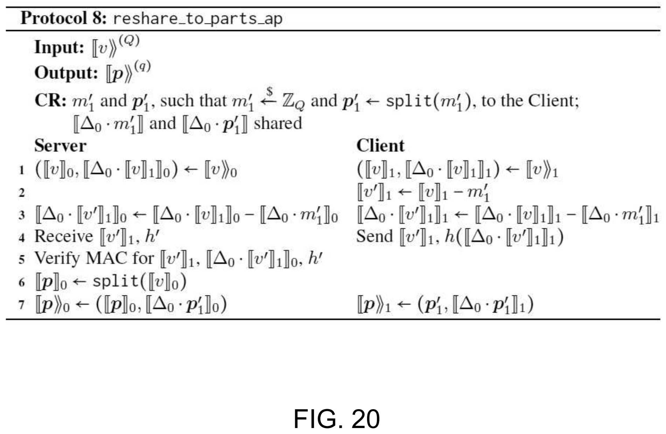

Figure 9 shows the asymmetric reshare to parts protocol. This is used in rejection checks of block 246, Figure 5B. An example protocol is shown in Figure 20.

This protocol is applied to a coefficient of <z> or <x> (which are secret-shared). The structure of "asymmetric reshare to parts" is as follows. The CRP has secret-shared certain values with the client and the server. The client computes one value (which is masking <z>_c or <x>_c) with a random value from the CRP and sends it to the server. The client's output of the protocol are some of the shares the client received from the CRP. The server's output of the protocol is computed for server's input shares, the value received from the client, and the shares received from the CRP.

## Key generation

This protocol follows the steps of the key generation procedure shown in box 210 of Figure 3. The matrix **A** is publicly generated. The client and server agree on a random seed, from which **A** will be extracted. The coefficients of the polynomials in the vectors $s_1$ and $s_2$ are generated as follows. Note that they will come either from a 5-element set or from a 9-element set.

For a random value from a five-element set, but shared over the ML-DSA modulus q, then we first use a protocol to generate a shared random number modulo 5. Then the five possible values are mapped into "-2", "-1", "0", "1", and "2", shared modulo q.

For a random value from a nine-element set, then we first use a protocol to generate a shared random number modulo 3, and repeat its use. Them the three possible values from the first invocation are mapped into values "-3", "0", and "3", shared modulo q. Then the three possible values from the first (second?) invocation into values "-1", "0", and "1", shared modulo q. Then, the two are added together. The rest of the key generation consists of linear operations.

The key generation protocol has been made secure against an actively corrupted CRP. This is achieved by the client and the server additionally verifying that CRP's input has been correctly generated. In the key generation protocol, CRP's input is a bunch of one-hot 0-1 vectors of length 5 (or 3, depending on the security level). In order to verify this, client and server add up the elements of the vector, and publicly check that the sum is 1. They also form all pairwise products of the elements of the vector (of which there are not that many, because the vectors themselves are short), and check that all products are 0. Before computing the pairwise products, client and server multiply the elements of the vector with random constants, thereby ensuring that the CRP could not have known the to-be-multiplied values.

An example protocol is shown in Figure 19.

**CRP**

The two-party computation protocols rely on a third participant, the Correlated Randomness Provider (CRP). The protocols may be called a 2+1 party protocol. The purpose of CRP is to emit (generate and distribute) the additively shared values to the parties (the server and the client). The values generated hold a specific relation (or relations) that are prescribed by the protocol, for which these values are used.

The CRP never receives any information from the server or the client, except for the randomly (or pseudor-andomly) generated $\Delta$ values. Alternatively, the CRP could generate the $\Delta$ values itself, and send them to the client and the server. Also, an honest CRP does not influence the outputs of the protocols. Thus the CRP is not considered to be a third party in the protocol.

The volume of data that the CRP needs to send to the parties may be very large. Traffic to one of the parties can be significantly reduced by only providing this party with a seed, which can be expanded into a vector of shares. Let f be a cryptographically secure pseudorandom number generator, such that $f(s) = ((v))\_1$. Then, $v = \langle\langle v \rangle\rangle\_0 + f(s)$, where $((v))\_0$ will be sent to the server and s is sent to the Client. For example, the client device of a user may contact the CRP only very rarely (strictly speaking, only a single contact ever is necessary), in order to agree on the random seed that this user's client device will use. The CRP will generate the service provider's part of the correlated randomness on the basis of the randomness into which the user's random seed expands. There is a high-bandwidth connection from the CRP to the service provider (but not in the other direction) to communicate the service provider's part of the correlated randomness.

There are actually a couple of different kinds of correlated randomness that the CRP creates. One form of randomness generated by the CRP is a secret sharing of a random value s, and secret sharings of the elements of the characteristic vectors of the digits of s, used in the high bits and reshare to parts protocol. Another form of randomness generated by the CRP is secret-sharing of a random value v, and secret sharings of the elements of the characteristic vector of v. There is also secret sharing of a random bit b (over some modulus q, over which we need that bit to be shared). And there are the usual multiplication triples (secret sharings of random values a and b, and secret sharing of the value c=ab). The rejection check also introduces secret sharing of a random value s, and secret sharing of the digits of s.

In general, the private computations with authenticated secret-shared values consist of two *phases:* the *offline* phase and the *online* phase. The offline phase can be executed without the inputs to the computation; the outputs of that phase (called the *correlated randomness)* are used by all *non-linear* operations (i.e. all operations except addition and multiplication with a constant) in the online phase. The offline phase is typically significantly more expensive than the online phase. The offline phase may be replaced by a "+1" party, the "correlated randomness provider (CRP)" that generates the correlated randomness and sends it to the computing parties.

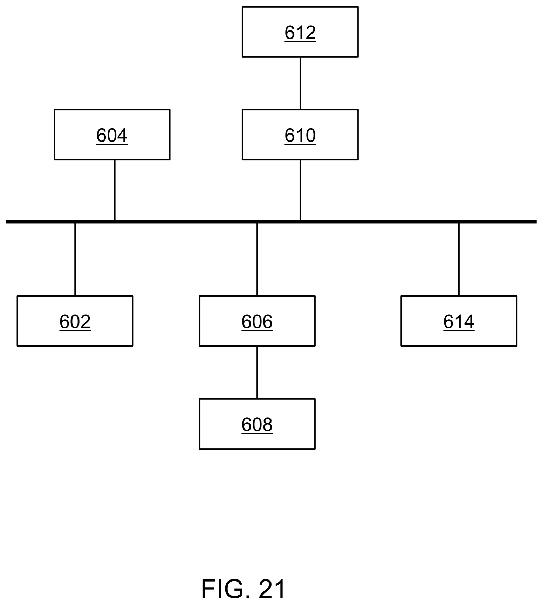

Figure 21 shows a schematic and simplified representation of a computer apparatus 600 which can be used to perform methods described herein, either alone, in combination with other computer apparatuses or as part of a network or a "cloud" computing arrangement.

The computer apparatus 600 comprises various data processing resources such as a processor 602 (in particular, a hardware processor) coupled to a central bus structure. Also connected to the bus structure are further data processing resources such as memory 604. A display adapter 606 connects a display device 608 to the bus structure. One or more user-input device adapters 610 connect a user-input device 612, such as a keyboard and/or a mouse to the bus structure. One or more communications adapters 614 are also connected to the bus structure to provide connections to other computer systems 600 and other networks.

In operation, the processor 602 of computer system 600 executes a computer program comprising computer-executable instructions that may be stored in memory 604. When executed, the computer-executable instructions may cause the computer system 600 to perform one or more of the methods described herein. The results of the processing performed may be displayed to a user via the display adapter 606 and display device 608. User inputs for controlling the operation of the computer system 600 may be received via the user-input device adapters 610 from the user-input devices 612.

It will be apparent that some features of computer system 600 shown in Figure 21 may be absent in certain cases. For example, one or more of the plurality of computer apparatuses 600 may have no need for display adapter 606 or display device 608. This may be the case, for example, for particular server-side computer apparatuses 600 which are used only for their processing capabilities and do not need to display information to users. Similarly, user input device adapter 610 and user input device 612 may not be required. In its simplest form, computer apparatus 600 comprises processor 602 and memory 604.

The above detailed description describes a variety of example arrangements for and methods of performing distributed signing. However, the described arrangements and methods are merely exemplary, and it will be appreciated by a person skilled in the art that various modifications can be made without departing from the scope of the appended claims.

More generally, it should be appreciated that the number of steps shown in the figures is not intended to be limiting. Steps may be repeated as often as necessary and certain steps may be omitted.

The computer apparatus discussed above may be a local computer or a server.

While various specific combinations of components and method steps have been described, these are merely examples. Components and method steps may be combined in any suitable arrangement or combination. Components and method steps may also be omitted to leave any suitable combination of components or method steps.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

In an implementation, the modules, components and other features described herein can be implemented as discrete components or integrated in the functionality of hardware components such as ASICS, FPGAs, DSPs or similar devices.

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the disclosure. It will also be apparent that there are many variations that have not been described, but that fall within the scope of the appended claims.

The present disclosure also includes a number of examples according to the following numbered clauses.

1. A computer-implemented method for two-party computation of a digital signature of a message using a lattice-based digital signature scheme, wherein the lattice-based digital signature scheme uses a public key and a private key comprising a first private key share and a second private key share, the method comprising at a first party:

receiving the message for signing;
retrieving the first private key share held by the first party;
computing a first party share of the digital signature based on the message, the first private key share and secret-shared data, wherein secret-sharing is performed with a second party which holds the second private key share;
receiving a second party share of the digital signature from the second party; and
forming the digital signature by combining the first party share of the digital signature and the second party share of the digital signature.

2. The method of clause 1 further comprising, after forming the digital signature by combining the first party share of the digital signature and the second party share of the digital signature, verifying the digital signature at the first party.

3. The method of clause 2 wherein the verifying comprises computing a hash of the message M, the public key and the digital signature.

. The method of clause 2 or 3 further comprising sending the digital signature to the second party when the verifying is successful.

5. The method of any one of clauses 2 to 4 further comprising destroying the first private key share if the verifying is not successful.

6. The method of any one of the preceding clauses wherein computing the digital signature comprises generating a first party share of a masking vector y of polynomials with coefficients.

7. The method of clause 6 wherein generating a first party share of a masking vector comprises generating random bits of the coefficients.

8. The method of clause 6 or 7 wherein computing the digital signature comprises:

computing a first party share of a matrix-vector product **w** by multiplying a matrix **A** from the public key and the first party share of the masking vector **y,** wherein the first party share of the matrix-vector product **w** comprises polynomials with first party shares of the coefficients, and

determining high bits values of the coefficients of the matrix-vector product **w.**

9. The method of clause 8 wherein determining the high bits values of the coefficients of the matrix-vector product **w** comprises:

determining the first party's share of the high bits value in the matrix-vector product **w.**

10. The method of clause 9 wherein determining the first party's share of the high bits value in the matrix-vector product **w** comprises:

computing a first party share of a masked quantity using the first party share of the coefficient values and a first party share of a secret-shared random value s;

sending the first party share of the masked quantity to the second party and receiving a second party share of the masked quantity from the second party;

recovering a combined masked quantity using the first party masked quantity and the second party masked quantity.

11. The method of clause 10 further comprising:

splitting the combined masked quantity into digits according to a mixed-radix basis;

receiving the first party share of the characteristic vectors corresponding to the digits of random value s;

summing the first party shares of the characteristic vectors of the digits of the random value s with the corresponding digits of the masked quantity.

12. The method of clause 11 wherein the radix basis comprises the values: 31, 24, 16, 16, 89 for an ML-DSA scheme with a value of $\alpha = 190464$ and the radix basis comprises the values: 31, 33, 32, 16, 33 for an ML-DSA scheme with a value of $\alpha = 523776$.

13. The method of any of clauses 8 to 12, wherein a total high bits value for a coefficient of the matrix-vector product **w** comprises the first party's share of the high bits value and the second party's share of the high bits value, the method comprising:

sending the first party's share of the high bits value to the second party; and

receiving the second party's share of the high bits value from the second party; and

recovering the total high bits value by summing the first party's share of the high bits value and the second party's share of the high bits value.

14. The method of any of clauses 8 to 13 further comprising computing a challenge value c comprising a hash of the message M with the total high bits values of the coefficients of the matrix-vector product **w.**

15. The method of any one of the preceding clauses further comprising:

determining a first party share of a secret-shared signature quantity z computed using the first party share <y>_c of the masking vector **y,** the challenge value c and a first party share of the secret key s1_c; and

performing a first rejection check on coefficient values of the secret-shared signature quantity z by cooperation with the second party.

16. The method of clause 15 further comprising receiving an outcome of the first rejection check based on a comparison of the first party share and the second party share of the secret-shared signature quantity z.

17. The method of clause 15 or 16 further comprising:

determining a first party share of a further secret-shared quantity x computed using the first party share of the matrix-vector product **w,** the challenge value c and a first party share of the secret key s2_c; and

performing a second rejection check on coefficient values of the further secret-shared signature quantity x by cooperation with the second party.

18. The method of clause 17 further comprising receiving an outcome of the second rejection check based on a comparison of the first party share and the second party share of the further secret-shared signature quantity x.

19. The method of clause 18 further comprising declassifying the signature quantity z to the first party if the first rejection check passes and the second rejection check passes.

20. The method of any of clauses 15 to 19 wherein communication between the first party and the second party makes asymmetric use of authentication codes.

21. The method of any one of the preceding clauses wherein the first party share of the signature comprises the quantity z and the challenge value c.

22. The method of any one of the preceding clauses wherein the first party sends data to the second party using a combination of the data and at least one first party authentication code.

23. The method of any one of the preceding clauses wherein the first party receives data from the second party using a combination of the data and at least one second party authentication code.

24. The method of any one of the preceding clauses further comprising generating the public key and the first private key share.

25. The method of any one of the preceding clauses further comprising receiving first party shares of random values s from a correlated randomness provider.

26. The method of clause 25 further comprising:

   receiving a seed from the correlated randomness provider; and
   generating a plurality of first party shares of random values from the seed.

27. The method of any one of the preceding clauses wherein the lattice-based digital signature scheme is Module-Lattice-Based Digital Signature Standard (ML-DSA).

28. The method of any one of the preceding clauses wherein the first party is a client device.

29. The method of any one of the preceding clauses wherein the first party is a server.

30. A computer-implemented method for two-party computation of a digital signature of a message using a lattice-based digital signature scheme, wherein the lattice-based digital signature scheme uses a public key and a private key comprising a first private key share and a second private key share, the method comprising at a second party:

   receiving the message for signing or a hash of the message for signing;
   retrieving the second private key share held by the second party;
   computing a second party share of the digital signature based on the message, the second private key share and secret-shared data, wherein secret-sharing is performed with a first party which holds the first private key share; and
   outputting the second party share of the digital signature to the first party.

31. An apparatus configured to perform the method of any of clauses 1 to 30.

32. A computer readable medium having instructions stored thereon which when executed by a processor cause the processor to perform a method according to any of clauses 1 to 30.

33. A system comprising an apparatus according to clause 31 configured as the first party and an apparatus according to clause 31 configured as the second party.


**Claims**

1. A computer-implemented method for two-party computation of a digital signature of a message using a lattice-based digital signature scheme, wherein the lattice-based digital signature scheme uses a public key and a private key comprising a first private key share and a second private key share, the method comprising at a first party:

   receiving the message for signing;
   retrieving the first private key share held by the first party;
   computing a first party share of the digital signature based on the message, the first private key share and secret-shared data, wherein secret-sharing is performed with a second party which holds the second private key share;
   receiving a second party share of the digital signature from the second party; and
   forming the digital signature by combining the first party share of the digital signature and the second party share of the digital signature.

2. The method of claim 1 further comprising, after forming the digital signature by combining the first party share of the digital signature and the second party share of the digital signature, verifying the digital signature at the first party, optionally wherein the verifying comprises computing a hash of the message **M**, the public key and the digital signature.

3. The method of claim 1 or claim 2, wherein computing the digital signature comprises generating a first party share of a masking vector **y** of polynomials with coefficients, and optionally wherein generating a first party share of a masking vector comprises generating random bits of the coefficients.

4. The method of claim 3, wherein computing the digital signature comprises:

computing a first party share of a matrix-vector product **w** by multiplying a matrix **A** from the public key and the first party share of the masking vector **y**, wherein the first party share of the matrix-vector product **w** comprises polynomials with first party shares of the coefficients, and
determining high bits values of the coefficients of the matrix-vector product **w.**

5. The method of claim 4, wherein determining the high bits values of the coefficients of the matrix-vector product **w** comprises determining the first party's share of the high bits value in the matrix-vector product **w;** and
optionally wherein determining the first party's share of the high bits value in the matrix-vector product **w** comprises:

computing a first party share of a masked quantity using the first party share of the coefficient values and a first party share of a secret-shared random value s;
sending the first party share of the masked quantity to the second party and receiving a second party share of the masked quantity from the second party;
recovering a combined masked quantity using the first party masked quantity and the second party masked quantity.

6. The method of claim 5, further comprising:

splitting the combined masked quantity into digits according to a mixed-radix basis; receiving the first party share of the characteristic vectors corresponding to the digits of random value s;
summing the first party shares of the characteristic vectors of the digits of the random value s with the corresponding digits of the masked quantity;
optionally wherein the radix basis comprises the values: 31, 24, 16, 16, 89 for an ML-DSA scheme with a value of $\alpha$ = 190464 and the radix basis comprises the values: 31, 33, 32, 16, 33 for an ML-DSA scheme with a value of $\alpha$ = 523776.

7. The method of any preceding claim, further comprising:

determining a first party share of a secret-shared signature quantity z computed using the first party share <y>_c of the masking vector **y**, the challenge value c and a first party share of the secret key s1_c; and
performing a first rejection check on coefficient values of the secret-shared signature quantity z by cooperation with the second party;
the method optionally further comprising receiving an outcome of the first rejection check based on a comparison of the first party share and the second party share of the secret-shared signature quantity z.

8. The method of claim 7, further comprising:

determining a first party share of a further secret-shared quantity x computed using the first party share of the matrix-vector product **w**, the challenge value c and a first party share of the secret key s2_c;
performing a second rejection check on coefficient values of the further secret-shared signature quantity x by cooperation with the second party.

9. The method of claim 8, further comprising receiving an outcome of the second rejection check based on a comparison of the first party share and the second party share of the further secret-shared signature quantity x, optionally further comprising declassifying the signature quantity z to the first party if the first rejection check passes and the second rejection check passes.

10. The method of any preceding claim, wherein the first party share of the signature comprises the quantity z and the challenge value c.

11. The method of any preceding claim, wherein the first party sends data to the second party using a combination of the data and at least one first party authentication code; and/or wherein the first party receives data from the second party using a combination of the data and at least one second party authentication code.

12. The method of any preceding claim, further comprising receiving first party shares of random values s from a correlated randomness provider, and optionally further comprising:

> receiving a seed from the correlated randomness provider; and
> generating a plurality of first party shares of random values from the seed.

13. A computer-implemented method for two-party computation of a digital signature of a message using a lattice-based digital signature scheme, wherein the lattice-based digital signature scheme uses a public key and a private key comprising a first private key share and a second private key share, the method comprising at a second party:

> receiving the message for signing or a hash of the message for signing;
> retrieving the second private key share held by the second party;
> computing a second party share of the digital signature based on the message, the second private key share and secret-shared data, wherein secret-sharing is performed with a first party which holds the first private key share; and
> outputting the second party share of the digital signature to the first party.

14. An apparatus configured to perform the method of any preceding claim.

15. A computer readable medium having instructions stored thereon which when executed by a processor cause the processor to perform a method according to any of claims 1 to 13.

FIG. 1

EP 4 783 516 A1

FIG. 2

# ML-DSA

**Signing** — 220

- $\mathbf{y} \leftarrow\!\!\$\ S^{\ell}_{\gamma_1-1}$ — 221
- $\mathbf{w} \leftarrow \mathbf{A} \cdot \mathbf{y}$ — 222
- $c \leftarrow H(M, \mathbf{w}^H) \in B_\tau$ — 223
- $\mathbf{z} \leftarrow \mathbf{y} + c \cdot \mathbf{s}_1$ — 224
- $\mathbf{x} \leftarrow \mathbf{w} - c \cdot \mathbf{s}_2$ — 225
- if $\|\mathbf{z}\|_\infty \geq \gamma_1 - \beta$, restart — 226
- if $\|\mathbf{x}^L\|_\infty \geq \gamma_2 - \beta$, restart — 227
- return $(\mathbf{z}, c)$ — 228

**Key generation** — 210

- $\mathbf{A} \leftarrow\!\!\$\ R^{k\times\ell}_q \qquad \mathbf{s}_1 \leftarrow\!\!\$\ S^{\ell}_\eta \qquad \mathbf{s}_2 \leftarrow\!\!\$\ S^{k}_\eta$
- $\mathbf{t} \leftarrow \mathbf{A} \cdot \mathbf{s}_1 + \mathbf{s}_2$
- $\mathrm{pk} = (\mathbf{A}, \mathbf{t}) \quad \mathrm{sk} = (\mathbf{s}_1, \mathbf{s}_2)$

**Verification**

- $\mathbf{w}' \leftarrow \mathbf{A} \cdot \mathbf{z} - c \cdot \mathbf{t}$ $\qquad$ Note that $\mathbf{w}' = \mathbf{x}$
- Check if $\|\mathbf{z}\|_\infty < \gamma_1 - \beta$ and $c = H(M, \mathbf{w}'^H)$

(The *decomposition parameter* $\alpha$ is $2\gamma_2$) — 230

FIG. 3

FIG. 4

Introduce notation: $<v>_C = [v]_C, [MAC^C(v)]_C, [MAC^S(v)]_C$ and $<v>_S = [v]_S, [MAC^C(v)]_S, [MAC^S(v)]_S$. Arithmetic operations are componentwise

$\Delta_S, <s_1>_S,$
$<s_2>_S, \mathbf{A}, \mathbf{t}, M$

In parallel:
$0 \le i < l$
$0 \le u < 256$  **232**

$\Delta_C$ ——— generate y for i,u ——— $\Delta_S$

$\Delta_C, <s_1>_C,$
$<s_2>_C, \mathbf{A}, \mathbf{t}, M$

$<y_{i,u}>_C$ ————— $<y_{i,u}>_S$

Client

$<y_i>_C := <y_{i,0}>_C + <y_{i,1}>_C X + ... + <y_{i,255}>_C X^{255}$

$<\mathbf{y}>_C := (<y_0>_C, ..., <y_{l-1}>_C)$

$<\mathbf{w}>_C := \mathbf{A} \cdot <\mathbf{y}>_C$

**234**

$<y_i>_S := <y_{i,0}>_S + <y_{i,1}>_S X + ... + <y_{i,255}>_S X^{255}$

$<\mathbf{y}>_S := (<y_0>_S, ..., <y_{l-1}>_S)$

$<\mathbf{w}>_S := \mathbf{A} \cdot <\mathbf{y}>_S$

**236**

$(<w_0>_C, ..., <w_{k-1}>_C) := <\mathbf{w}>_C$
$<w_{i,0}>_C + <w_{i,1}>_C X + ... + <w_{i,255}>_C X^{255} := <w_i>_C$

$(<w_0>_S, ..., <w_{k-1}>_S) := <\mathbf{w}>_S$
$<w_{i,0}>_S + <w_{i,1}>_S X + ... + <w_{i,255}>_S X^{255} := <w_i>_S$

Server

In parallel:
$0 \le i < l$
$0 \le u < 256$  **238**

$\Delta_C, <w_{i,u}>_C$ ——— high bits for i,u ——— $\Delta_S, <w_{i,u}>_S$

$<w^H_{i,u}>_C$ ————— $<w^H_{i,u}>_S$

In parallel:
$0 \le i < l$
$0 \le u < 256$  **240**

$\Delta_C, <w^H_{i,u}>_C$ ——— declassification for i,u ——— $\Delta_S, <w^H_{i,u}>_S$

$w^H_{i,u}$ ————— $w^H_{i,u}$

## FIG. 5A

EP 4 783 516 A1

FIRST PARTY
(CLIENT) 110

SECOND PARTY
(SERVER) 120

In parallel:
$0 \le i < l$
$0 \le u < 256$

declassification for i,u

$\Delta_C, <w^H_{i,u}>_C$

$\Delta_S, <w^H_{i,u}>_S$

$w^H_{i,u}$

$w^H_{i,u}$

$c = c_0 + c_1 X + \ldots + c_{255} X^{255} := H(M, \mathbf{w}^H)$ —242

244— $c = c_0 + c_1 X + \ldots + c_{255} X^{255} := H(M, \mathbf{w}^H)$

$<\mathbf{z}>_C := <\mathbf{y}>_C + c \cdot <\mathbf{s}_1>_C$

$<\mathbf{r}>_C := <\mathbf{w}>_C - 2\gamma_2 <\mathbf{w}^H>_C - c \cdot <\mathbf{s}_2>_C$

$<\mathbf{z}>_C := <\mathbf{y}>_S + c \cdot <\mathbf{s}_1>_S$

$<\mathbf{r}>_S := <\mathbf{w}>_S - 2\gamma_2 <\mathbf{w}^H>_S - c \cdot <\mathbf{s}_2>_S$

$(<z_0>_C, \ldots, <z_{l-1}>_C) := <\mathbf{z}>_C$

$(<r_0>_C, \ldots, <r_{k-1}>_C) := <\mathbf{r}>_C$

$<z_{i,0}>_C + <z_{i,1}>_C X + \ldots + <z_{i,255}>_C X^{255} := <z_i>_C$

$<r_{j,0}>_C + <r_{j,1}>_C X + \ldots + <r_{j,255}>_C X^{255} := <r_j>_C$

—243

245— $(<z_0>_S, \ldots, <z_{l-1}>_S) := <\mathbf{z}>_S$

$(<r_0>_S, \ldots, <r_{k-1}>_S) := <\mathbf{r}>_S$

$<z_{i,0}>_S + <z_{i,1}>_S X + \ldots + <z_{i,255}>_S X^{255} := <z_i>_S$

$<r_{j,0}>_S + <r_{j,1}>_S X + \ldots + <r_{j,255}>_S X^{255} := <r_j>_S$

246

In parallel:
$0 \le i < l$ or $0 \le j < k$
$0 \le u < 256$

rejection check
for (i or j), u

$[z_{i,u}]_C, [MAC^S(z_{i,u})]_C, \gamma_1 - \beta$

$[r_{j,u}]_C, [MAC^S(r_{j,u})]_C, \gamma_2 - \beta$

$\Delta_S \quad [z_{i,u}]_S, [MAC^S(z_{i,u})]_S, \gamma_1 - \beta$

$[r_{j,u}]_S, [MAC^S(r_{j,u})]_S, \gamma_2 - \beta$

$[t_{i|j, u}]_C, [MAC^S(t_{i|j, u})]_C$

$[t_{i|j, u}]_S, [MAC^S(t_{i|j, u})]_S$

248

long public
conjunction

$[\mathbf{t}]_C, [MAC^S(\mathbf{t})]_C$

$\Delta_S, [\mathbf{t}]_S, [MAC^S(\mathbf{t})]_S$

"All good" / "Some not good"

"All good" / "Some not good"

if "all good" then
$[\mathbf{z}]_C, c$
else reject

if "all good" then
$[\mathbf{z}]_S, c$
else reject

FIG. 5B

**FIRST PARTY (CLIENT) 110**

**SECOND PARTY (SERVER) 120**

Def: $constant_C(v)$ returns:

- share of the value: $v$
- share of client's MAC: 0
- share of server's MAC: 0

Def: $constant_S(v)$ returns:

- share of the value: 0
- share of client's MAC: 0
- share of server's MAC: $v \cdot \Delta_S$

250

$\Delta_C, <v>_C$

$<v'>_C := <v>_C + constant_C(\alpha/2 - 1)$

$$\alpha = r_1 \cdot r_2 \cdot \ldots \cdot r_k$$
$$s = (Q-1) / \alpha$$
Q and $\alpha$ come from ML-DSA specification

254

252

$\Delta_S, <v>_S$

$<v'>_S := <v>_S + constant_S(\alpha/2 - 1)$

$\Delta_C, <v'>_C$ ⟶

symmetric reshare to parts of size $(r_1, \ldots, r_k, 2s+1)$

⟵ $\Delta_S, <v'>_S$

⟨ $\begin{matrix} b_{1,1} \\ b_{1,2} \\ \vdots \\ b_{1,r1} \end{matrix}$ $\begin{matrix} b_{2,1} \\ b_{2,2} \\ \vdots \\ b_{2,r2} \end{matrix}$ $\ldots$ $\begin{matrix} b_{k,1} \\ b_{k,2} \\ \vdots \\ b_{k,rk} \end{matrix}$ $\begin{matrix} d_0 \\ d_1 \\ \vdots \\ d_{2s} \end{matrix}$ ⟩ C

⟨ $\begin{matrix} b_{1,1} \\ b_{1,2} \\ \vdots \\ b_{1,r1} \end{matrix}$ $\begin{matrix} b_{2,1} \\ b_{2,2} \\ \vdots \\ b_{2,r2} \end{matrix}$ $\ldots$ $\begin{matrix} b_{k,1} \\ b_{k,2} \\ \vdots \\ b_{k,rk} \end{matrix}$ $\begin{matrix} d_0 \\ d_1 \\ \vdots \\ d_{2s} \end{matrix}$ ⟩ S

Client

Server

258

$<x_1>_C := <b_{1,1}>_C + <b_{2,1}>_C + \ldots <b_{k,1}>_C$
$<x_2>_C := <d_{s+1}>_C + <d_{s+2}>_C + \ldots + <d_{2s}>_C$

$<x>_C := constant_C(k+1) - <x_1>_C - <x_2>_C$

$<x_1>_S := <b_{1,1}>_S + <b_{2,1}>_S + \ldots <b_{k,1}>_S$
$<x_2>_S := <d_{s+1}>_S + <d_{s+2}>_S + \ldots + <d_{2s}>_S$

$<x>_S := constant_S(k+1) - <x_1>_S - <x_2>_S$

260

$\Delta_C, <x>_C$ ⟶

equals zero? limit: $k+2$

⟵ $\Delta_S, <x>_S$

⟵ $<z>_C$

$<z>_S$ ⟶

262

$<t_0>_C := 0 \cdot <d_0>_C + 1 \cdot <d_1>_C + \ldots + (s-1) \cdot <d_{s-1}>_C$
$<t_1>_C := 0 \cdot <d_s>_C + 1 \cdot <d_{s+1}>_C + \ldots + (s-1) \cdot <d_{2s-1}>_C + s \cdot <d_{2s}>_C$

$<t_0>_S := 0 \cdot <d_0>_S + 1 \cdot <d_1>_S + \ldots + (s-1) \cdot <d_{s-1}>_S$
$<t_1>_S := 0 \cdot <d_s>_S + 1 \cdot <d_{s+1}>_S + \ldots + (s-1) \cdot <d_{2s-1}>_S + s \cdot <d_{2s}>_S$

$<t_0>_C + <t_1>_C - <z>_C$

$<t_0>_S + <t_1>_S - <z>_S$

**FIG. 6**

FIG. 7A

EP 4 783 516 A1

$i \leq k$ ? —NO

YES

$\langle x_i \rangle_C := \Sigma \langle p_{i,R} \rangle_C$

$\langle q'_i \rangle_C := \boxed{\quad \langle q_{i+1} \rangle_C \quad}\boxed{0}$

$\langle q''_i \rangle_C := \boxed{0}\boxed{\quad \langle q_{i+1} \rangle_C \quad}$

$\langle x_i \rangle_S := \Sigma \langle p_{i,R} \rangle_S$

$\langle q'_i \rangle_S := \boxed{\quad \langle q_{i+1} \rangle_S \quad}\boxed{0}$

$\langle q''_i \rangle_S := \boxed{0}\boxed{\quad \langle q_{i+1} \rangle_S \quad}$

$\Delta_C, \langle x_i \rangle_C, \langle q''_i \rangle_C, \langle q'_i \rangle_C$

if-then-else

$\Delta_S, \langle x_i \rangle_S, \langle q''_i \rangle_S, \langle q'_i \rangle_S$

$\langle p'_{i+1} \rangle_C$

$\langle p'_{i+1} \rangle_S$

$i := i+1$

GOTO

$\langle p_1 \rangle_C, ..., \langle p_k \rangle_C$

$\langle p_1 \rangle_S, ..., \langle p_k \rangle_S$

FIG. 7B

FIRST PARTY
(CLIENT) 110

SECOND PARTY
(SERVER) 120

320

Parameter: limit b
Modulus in use: Q
Let $a := \lfloor Q/b \rfloor$
$\Delta_C, <v>_C$

$\Delta_C, \Delta_S$

CRP
140

322

$\Delta_S, <\mathbf{v}>_S$

324

$<m>_C, <t_0>_C, <t_1>_C, ..., <t_b>_C$

326

$<m>_S, <t_0>_S, <t_1>_S, ..., <t_b>_S$

m is chosen randomly from 0, ..., Q-1
$t_{\lfloor m/a \rfloor} := 1$
The rest of $t_i$ are zeroes

328

$<d>_C := <m>_C + a \cdot <v>_C$

$<d>_S := <m>_S + a \cdot <v>_S$

330

$\Delta_C, <d>_C$

Declassify

$\Delta_S, <d>_S$

d

d

332

$k := \lfloor d/a \rfloor$

$<t_k>_C$

$<t_k>_S$

FIG. 8

EP 4 783 516 A1

EP 4 783 516 A1

**FIRST PARTY (CLIENT) 110**

**SECOND PARTY (SERVER) 120**

$\{v\}_C$

$\{v\}_S, \Delta_S$

Notation: $\{v\}_C = [v]_C, [MAC^S(v)]_C$
$\{v\}_S = [v]_S, [MAC^S(v)]_S$

Denote: $\text{split}(v,(r_1,...,r_k)) = (d_1,...,d_k)$, where $d_1,...,d_k$ are the digits of $v$ in the mixed-radix basis $r_1,...,r_k$
Let "unsplit" be the inverse of "split"

$\Delta_S$

CRP

$m, [m \cdot \Delta_S]_C, [\mathbf{p}]_C, [MAC^S(\mathbf{p})]_C$

$[m \cdot \Delta_S]_S, [\mathbf{p}]_S, [MAC^S(\mathbf{p})]_S$

$m$ is a random element of $Z_Q$
$\mathbf{p} := \text{split}(m, (r_1, ..., r_k))$
(the modulus of sharing the elements of $\mathbf{p}$ may differ from the modulus of sharing $m$)

$r := [v]_C - m$
$z := [MAC^S(v)]_C - [m \cdot \Delta_S]_C$

$w := \text{unsplit}([\mathbf{p}]_S, (r_1,...,r_k))$

— r, z —

Verify that $r \cdot \Delta_S - [m \cdot \Delta_S]_S = z$

$[\mathbf{q}]_C := [\mathbf{p}]_C$

$[\mathbf{q}]_S := \text{split}(w+r, (r_1,...,r_k))$

$[MAC^S(\mathbf{q})]_C := [MAC^S(\mathbf{p})]_C$

$[MAC^S(\mathbf{q})]_S := [MAC^S(\mathbf{p})]_S$

$\{\mathbf{q}\}_S$

$\{\mathbf{q}\}_C$

**FIG. 9**

FIG. 10

EP 4 783 516 A1

$\Delta_S$

generate random $\text{seed}_S$

$\text{seed}_S$

$A := PRG(\text{seed}_C \| \text{seed}_S) \in (Z_q[X]/(X^{256}+1))^{k \times l}$

Server

$\Delta_S$

$<s_{1,j,u}>_C$ or $<s_{2,j,u}>_C$

$<s_{1,j}>_S := <s_{1,j,0}>_S + <s_{1,j,1}>_S X + \ldots + <s_{1,j,255}>_S X^{255}$

$<s_{2,j}>_S := <s_{2,j,0}>_S + <s_{1,j,1}>_S X + \ldots + <s_{1,j,255}>_S X^{255}$

$<\mathbf{s_1}>_S := (<s_{1,0}>_S, \ldots, <s_{1,l-1}>_S)$

$<\mathbf{s_2}>_S := (<s_{2,0}>_S, \ldots, <s_{2,k-1}>_S)$

$<\mathbf{t}>_S := A \cdot <\mathbf{s_1}>_S + <\mathbf{s_2}>_S$

$\Delta_S, <\mathbf{t}>_S$

$\mathbf{t}$

all coefficients in all elements of $\mathbf{t}$
declassify

FIG. 11

$A, \mathbf{t}, <\mathbf{s_1}>_S, <\mathbf{s_2}>_S$

A could be saved as $\text{seed}_C \| \text{seed}_S$

$\eta = 5$ or $\eta = 9$, depending on the security level of ML-DSA

$\Delta_C$

generate random $\text{seed}_C$

$\text{seed}_C$

$A := PRG(\text{seed}_C \| \text{seed}_S) \in (Z_q[X]/(X^{256}+1))^{k \times l}$

In parallel
$0 \leq i < l$ and $0 \leq j < k$
$0 \leq u < 256$
generate coefficient $\eta$

$\Delta_C$

$<s_{1,j,u}>_C$ or $<s_{2,j,u}>_C$

$<s_{1,j}>_C := <s_{1,j,0}>_C + <s_{1,j,1}>_C X + \ldots + <s_{1,j,255}>_C X^{255}$

$<s_{2,j}>_C := <s_{2,j,0}>_C + <s_{1,j,1}>_C X + \ldots + <s_{1,j,255}>_C X^{255}$

$<\mathbf{s_1}>_C := (<s_{1,0}>_C, \ldots, <s_{1,l-1}>_C)$

$<\mathbf{s_2}>_C := (<s_{2,0}>_C, \ldots, <s_{2,k-1}>_C)$

$<\mathbf{t}>_C := A \cdot <\mathbf{s_1}>_C + <\mathbf{s_2}>_C$

$\Delta_C, <\mathbf{t}>_C$

$\mathbf{t}$

Client

$A, \mathbf{t}, <\mathbf{s_1}>_C, <\mathbf{s_2}>_C$

A could be saved as $\text{seed}_C \| \text{seed}_S$

**Protocol 17:** sign

**Input:** Message $M$ (on the Client side), private key shards
**Output:** Signature (on the Client side)

Party $i$ loads private key shard $(\rho, tr, \langle\!\langle s_1 \rangle\!\rangle_i, \langle\!\langle s_2 \rangle\!\rangle_i, t)$

Client derives $\mu$ (from public key hash $tr$ and $M$) and sends it to the Server

Parties expand $\rho$ into $A$

**for** $i \in \{0, \dots\}$ **consecutively:**

    $r \leftarrow \mathtt{signing\_attempt}(s_1, s_2, A, \mu)$

    **if** $r = \perp$ **then**

        **continue**

    $\langle\!\langle z \rangle\!\rangle, c_t \leftarrow r$

| | **Server** | **Client** |
|---|---|---|
| 9 | Reveals $\langle\!\langle z \rangle\!\rangle_0$ | Accepts $\langle\!\langle z \rangle\!\rangle_0$ and verifies MAC |
| 10 | | $z \leftarrow \langle\!\langle z \rangle\!\rangle_0 + \langle\!\langle z \rangle\!\rangle_1$ |
| 11 | | Performs $\mathtt{local\_rejection\_check}$ |
| 12 | | Performs $\mathtt{make\_hint}$, obtaining $h$ |

    Client notifies the Server whether $h = \perp$

    **if** $h = \perp$ **then**

        **continue**

    **else**

        Client computes the signature from $(z, c_t, h)$

# FIG. 12

---

**Protocol 18:** `signing_attempt`

---

**Input:** $s_1, s_2, A, \mu$

**Output:** $r$, such that either $r = (\langle\!\langle z \rangle\!\rangle, c_t)$, or $r = \bot$

**for** $i \in [0; l)$ **in parallel:**

    **for** $u \in [0; 256)$ **in parallel:**

        $\langle\!\langle y_{(i,u)} \rangle\!\rangle \leftarrow \mathrm{generate\_y}(\log_2 \gamma_1)$        $\triangleright \gamma_1$ is a power of 2

$\langle\!\langle w \rangle\!\rangle \leftarrow A \langle\!\langle y \rangle\!\rangle$       $\triangleright$ NTT forms are used for matrix multiplication

$\langle\!\langle w^H \rangle\!\rangle \leftarrow \mathrm{high\_bits}(\langle\!\langle w \rangle\!\rangle, 2 \cdot \gamma_2)$

Parties declassify $w^H$

Parties compute seed $c_t$ from $\mu, w^H$

Parties compute $c$ from $c_t$

$\langle\!\langle z \rangle\!\rangle \leftarrow \langle\!\langle y \rangle\!\rangle + c \cdot \langle\!\langle s_1 \rangle\!\rangle$       $\triangleright$ NTT forms are used for multiplication

$\langle\!\langle w^L \rangle\!\rangle \leftarrow \langle\!\langle w \rangle\!\rangle - 2\gamma_2 \cdot \langle\!\langle w^H \rangle\!\rangle$

$\langle\!\langle r^L \rangle\!\rangle \leftarrow \langle\!\langle w^L \rangle\!\rangle - c \cdot \langle\!\langle s_2 \rangle\!\rangle$       $\triangleright$ NTT forms are used for multiplication

$b \leftarrow \left( \gamma_{i=0}^{|z|-1} (\gamma_1 - \beta) \mid \gamma_{i=0}^{|r^L|-1} (\gamma_2 - \beta) \right)$

$h \leftarrow \mathrm{rejection\_check}(\langle\!\langle z \rangle\!\rangle | \langle\!\langle r^L \rangle\!\rangle, b)$

**if** $h$ **then**

    $r \leftarrow (\langle\!\langle z \rangle\!\rangle, c_t)$

**else**

    $r \leftarrow \bot$

---

# FIG. 13

---

**Protocol 15:** `high_bits`

---

**Input:** $\langle\!\langle v \rangle\!\rangle^{(Q)}, \alpha$

**Output:** $\langle\!\langle h \rangle\!\rangle^{(Q)}$

$\langle\!\langle v' \rangle\!\rangle \leftarrow \langle\!\langle v \rangle\!\rangle + \frac{\alpha}{2} - 1$

$j = \frac{Q-1}{\alpha}$

$r \leftarrow \begin{cases} (31, 24, 16, 16, 2 \cdot j + 1) & \text{if } \alpha = 190464 \\ (31, 33, 32, 16, 2 \cdot j + 1) & \text{if } \alpha = 523776 \end{cases}$

$[\langle\!\langle b_0 \rangle\!\rangle^{(Q)}, \ldots, \langle\!\langle b_{|r|-1} \rangle\!\rangle^{(Q)}] \leftarrow \mathtt{symmetric\_reshare\_to\_parts}(\langle\!\langle v' \rangle\!\rangle, r)$

$\langle\!\langle k_v \rangle\!\rangle \leftarrow |r| - \sum_{i=0}^{|r|-2} \langle\!\langle b_{(i,0)} \rangle\!\rangle - \sum_{i=j+1}^{2 \cdot j} \langle\!\langle b_{(|r|-1,i)} \rangle\!\rangle$

$\langle\!\langle k_r \rangle\!\rangle \leftarrow \mathtt{eqzero}(\langle\!\langle k_v \rangle\!\rangle, |r| + 1)$

$\langle\!\langle c_v \rangle\!\rangle \leftarrow 1 - \langle\!\langle b_{(|r|-1,2 \cdot j)} \rangle\!\rangle + \langle\!\langle k_r \rangle\!\rangle$

$\langle\!\langle c_r \rangle\!\rangle \leftarrow \mathtt{eqzero}(\langle\!\langle c_v \rangle\!\rangle, 3)$

Parties declassify $c_r$

Parties verify $c_r \stackrel{?}{=} 0$

$\langle\!\langle h' \rangle\!\rangle \leftarrow \sum_{i=0}^{j-1} (i \cdot \langle\!\langle b_{(|r|-1,i)} \rangle\!\rangle) + \sum_{i=0}^{j-1} (i \cdot \langle\!\langle b_{(|r|-1,j+i)} \rangle\!\rangle) + j \cdot \langle\!\langle b_{(|r|-1,2 \cdot j)} \rangle\!\rangle$

$\langle\!\langle h \rangle\!\rangle \leftarrow \langle\!\langle h' \rangle\!\rangle - \langle\!\langle k_r \rangle\!\rangle$

---

## FIG. 14

---

**Protocol 13:** `eqzero`

---

**Input:** $[\![v]\!]^{(Q)}, b$

**Output:** $[\![z]\!]^{(Q)}$

**CR:** $[\![m]\!]^{(Q)}$, where $m \stackrel{\$}{\leftarrow} \mathbb{Z}_Q$, $[\![t]\!]^{(q)}$, such that $|t| = b + 1$ and

$$t_i = \begin{cases} 1 & \text{if } \lfloor \frac{m}{a} \rfloor = i \\ 0 & \text{else} \end{cases}, \text{where } a = \left\lfloor \frac{Q}{b} \right\rfloor$$

$a \leftarrow \left\lfloor \frac{Q}{b} \right\rfloor$

$[\![d]\!]^{(Q)} \leftarrow [\![m]\!]^{(Q)} + a \cdot [\![v]\!]^{(Q)}$

Parties declassify $d$

$[\![z]\!]^{(Q)} \leftarrow [\![t_{\lfloor \frac{d}{a} \rfloor}]\!]^{(Q)}$

---

## FIG. 15

---

**Protocol 14:** `symmetric_reshare_to_parts`

---

**Input:** $\langle\!\langle v \rangle\!\rangle^{(Q)}, r$

**Output:** $[\langle\!\langle b_0 \rangle\!\rangle^{(Q)}, \ldots, \langle\!\langle b_{r-1} \rangle\!\rangle^{(Q)}]$

**CR:** For $i \in [0, |r|)$:

$\qquad \llbracket m_i \rrbracket^{(2 \cdot r_i)}$, where $m_i \xleftarrow{\$} \mathbb{Z}_{2 \cdot r_i}$,

$\qquad \langle\!\langle b_i' \rangle\!\rangle^{(Q)}, |b_i'| = r_i$, where $b_{(i,u)}' = \begin{cases} 1 & \text{if } (u + \widetilde{m_i}) \bmod^+ r_i = 0 \\ 0 & \text{otherwise} \end{cases}$,

$\qquad \llbracket c_i \rrbracket^{(2 \cdot r_{i+1})}, |c_i| = 2 \cdot r_i$, where $c_{(i,u)} = \begin{cases} 1 & \text{if } (u - \widetilde{m_i}) \bmod^+ (2 \cdot r_i) \geq r_i \\ 0 & \text{otherwise} \end{cases}$

$\bar{r} \leftarrow \gamma_{i=0}^{|r|-1} \prod_{u=0}^{i-1} r_i$

Party $i$ computes $\llbracket y \rrbracket_i \leftarrow \texttt{split}(\llbracket v \rrbracket_i^{(Q)}, r)$

$\llbracket c' \rrbracket \leftarrow 0$

**for** $i \in [0, |r|)$ **consecutively:**

$\qquad \llbracket k \rrbracket^{(2 \cdot r_i)} \leftarrow \left( \llbracket y_i \rrbracket + \llbracket c' \rrbracket^{(2 \cdot r_i)} \right) \bmod^+ (2 \cdot r_i)$

$\qquad \llbracket d \rrbracket^{(2 \cdot r_i)} \leftarrow \llbracket m_i \rrbracket^{(2 \cdot r_i)} + \llbracket k \rrbracket^{(2 \cdot r_i)}$

$\qquad$ Parties declassify $d$

$\qquad \langle\!\langle b_i \rangle\!\rangle^{(Q)} \leftarrow \langle\!\langle b_{(i,0-d)}' \rangle\!\rangle, \langle\!\langle b_{(i,1-d)}' \rangle\!\rangle, \ldots, \langle\!\langle b_{(i,r_i-1-d)}' \rangle\!\rangle \qquad \triangleright$ Indexes are *modulo* $r_i$

$\qquad \langle\!\langle p_i \rangle\!\rangle^{(Q)} \leftarrow \sum_{u=0}^{r_i-1} (u \cdot \langle\!\langle b_{(i,u)} \rangle\!\rangle^{(Q)})$

$\qquad \llbracket c' \rrbracket \leftarrow \llbracket c_{(i,d)} \rrbracket$

$\langle\!\langle w \rangle\!\rangle^{(Q)} \leftarrow \langle\!\langle v \rangle\!\rangle^{(Q)} - \sum_{i=0}^{|r|-1} \left( \langle\!\langle p_i \rangle\!\rangle^{(Q)} \cdot \bar{r}_i \right)$

Parties declassify $w$

Parties verify $w \overset{?}{=} 0$

---

FIG. 16

**Protocol 11:** `rejection_check`

**Input:** $[\![v]\!]^{(Q)}, g$

**Output:** $t$

1 **for** $i \in \{0, \ldots, |v| - 1\}$ **in parallel:**

2 $\quad [\![v'_i]\!]^{(Q)} \leftarrow [\![v_i]\!]^{(Q)} + g_i - 1$

3 $\quad g'_i \leftarrow 2 \cdot g_i - 1 \hspace{5cm} \triangleright g'_i \in \mathbb{Z}_Q$

4 $\quad [\![p]\!]^{(q)} \leftarrow \texttt{reshare\_to\_parts\_ap}([\![v'_i]\!]^{(Q)})$

| | **Server** | **Client** |
|---|---|---|
| 5 | $([\![p]\!]_0^{(q)}, [\![\Delta_0 \cdot [\![p]\!]_1]\!]_0^{(q)}) \leftarrow [\![p]\!]_0^{(q)}$ | |
| 6 | $w_0 \leftarrow \texttt{unsplit}([\![p]\!]_0^{(q)})$ | |
| 7 | $w'_0 \leftarrow w_0 - g'_i$ | |
| 8 | $n \leftarrow r^d - Q$ | |
| 9 | $[\![a]\!]_0^{(q)} \leftarrow (\texttt{split}(\widetilde{w_0} + n), [\![\Delta_0 \cdot [\![p]\!]_1]\!]_0^{(q)})$ | $[\![a]\!]_1^{(q)} \leftarrow [\![p]\!]_1^{(q)}$ |
| 10 | $[\![b]\!]_0^{(q)} \leftarrow (\texttt{split}(\widetilde{w'_0} + n), [\![\Delta_0 \cdot [\![p]\!]_1]\!]_0^{(q)})$ | $[\![b]\!]_1^{(q)} \leftarrow [\![p]\!]_1^{(q)}$ |
| 11 | $[\![c]\!]_0^{(q_r)} \leftarrow \begin{cases} 1 & \text{if } \widetilde{w_0} \geq g'_i \\ 0 & \text{else} \end{cases}$ | $[\![c]\!]_1^{(q_r)} \leftarrow 0$ |

12 $\quad [\![y_a]\!]^{(q_r)} \leftarrow \texttt{long\_overflow}([\![a]\!]^{(q)}, r, q_r)$

13 $\quad [\![y_b]\!]^{(q_r)} \leftarrow \texttt{long\_overflow}([\![b]\!]^{(q)}, r, q_r) \hspace{2cm} \triangleright$ In parallel with previous

14 $\quad [\![r_i]\!]^{(q_r)} \leftarrow [\![y_b]\!]^{(q_r)} - [\![y_a]\!]^{(q_r)} + [\![c]\!]^{(q_r)}$

15 $[\![k]\!]^{(q_r)} \leftarrow \sum_{i=0}^{|v|-1} [\![r_i]\!]^{(q_r)}$

16 $[\![x]\!]^{(Q)} \leftarrow \texttt{characteristic\_vector}([\![k]\!]^{(q_r)}, Q)$

17 $[\![y]\!]^{(Q)} \leftarrow [\![x_0]\!]^{(Q)}$

18 Parties declassify $y$

19 $t \leftarrow \begin{cases} \textit{true} & \text{if } y = 1 \\ \textit{false} & \text{otherwise} \end{cases}$

FIG. 17

---

**Protocol 1:** declassify

**Input:** $\langle\!\langle v \rangle\!\rangle$
**Output:** $v$ (known by both parties)

1. $([\![v]\!], [\![\Delta_0 \cdot [\![v]\!]_1]\!], [\![\Delta_1 \cdot [\![v]\!]_0]\!]) \leftarrow \langle\!\langle v \rangle\!\rangle$

**Server** | **Client**

2. $h_0 \leftarrow h([\![\Delta_1 \cdot [\![v]\!]_0]\!]_0)$ | $h_1 \leftarrow h([\![\Delta_0 \cdot [\![v]\!]_1]\!]_1)$
3. Send $[\![v]\!]_0$ and $h_0$ | Send $[\![v]\!]_1$ and $h_1$
4. Receive $[\![v]\!]_1'$ and $h_1'$ | Receive $[\![v]\!]_0'$ and $h_0'$
5. Verify $h(\Delta_0 \cdot [\![v]\!]_1' - [\![\Delta_0 \cdot [\![v]\!]_1]\!]_0) \overset{?}{=} h_1'$ | Verify $h(\Delta_1 \cdot [\![v]\!]_0' - [\![\Delta_1 \cdot [\![v]\!]_0]\!]_1) \overset{?}{=} h_0'$
6. **Parties** accept that $[\![v]\!]_0 + [\![v]\!]_1' = [\![v]\!]_0' + [\![v]\!]_1 = v$ and output $v$

**FIG. 18**

---

**Protocol 16:** keygen

**Input:** $\varnothing$
**Output:** Public key, sharded private key

1. $(q_s, y_s) \leftarrow \begin{cases} (5,1) & \text{if } \eta = 2 \\ (3,2) & \text{if } \eta = 4 \end{cases}$
2. **for** $i \in [0; l+k)$ **in parallel:**
3.     **for** $u \in [0; n)$ **in parallel:**
4.         **for** $j \in [0; y_s)$ **in parallel:**
5.             $\langle\!\langle c_j \rangle\!\rangle \leftarrow$ generate_short$(q_s)$
6.         $\langle\!\langle r_{(i,u)} \rangle\!\rangle \leftarrow \left(\sum_{j=0}^{y_s-1}(q_s)^j \cdot \langle\!\langle c_j \rangle\!\rangle\right) - \eta$
7. $\langle\!\langle s_1 \rangle\!\rangle \leftarrow \langle\!\langle r_0 \rangle\!\rangle, \langle\!\langle r_1 \rangle\!\rangle, \ldots, \langle\!\langle r_{l-1} \rangle\!\rangle$
8. $\langle\!\langle s_2 \rangle\!\rangle \leftarrow \langle\!\langle r_l \rangle\!\rangle, \langle\!\langle r_{l+1} \rangle\!\rangle, \ldots, \langle\!\langle r_{l+k-1} \rangle\!\rangle$
9. Parties derive seed $\rho$ using some commitment scheme
10. Parties expand $\rho$ into $A$
11. $\langle\!\langle t \rangle\!\rangle \leftarrow A\langle\!\langle s_1 \rangle\!\rangle + \langle\!\langle s_2 \rangle\!\rangle$     ▷ NTT forms are used for matrix multiplication
12. Parties declassify $t$
13. Parties compute the public key from $(\rho, t)$
14. Parties compute the public key hash $tr$
15. Party $i$ saves the private key shard as $(\rho, tr, \langle\!\langle s_1 \rangle\!\rangle_i, \langle\!\langle s_2 \rangle\!\rangle_i, t)$

**FIG. 19**

---

**Protocol 8:** reshare_to_parts_ap

---

**Input:** $[\![v]\!]\!\rangle^{(Q)}$

**Output:** $[\![p]\!]\!\rangle^{(q)}$

**CR:** $m_1'$ and $p_1'$, such that $m_1' \overset{\$}{\leftarrow} \mathbb{Z}_Q$ and $p_1' \leftarrow \text{split}(m_1')$, to the Client; $[\![\Delta_0 \cdot m_1']\!]$ and $[\![\Delta_0 \cdot p_1']\!]$ shared

| **Server** | **Client** |
|---|---|
| $([\![v]\!]_0, [\![\Delta_0 \cdot [\![v]\!]_1]\!]_0) \leftarrow [\![v]\!]\!\rangle_0$ | $([\![v]\!]_1, [\![\Delta_0 \cdot [\![v]\!]_1]\!]_1) \leftarrow [\![v]\!]\!\rangle_1$ |
| | $[\![v']\!]_1 \leftarrow [\![v]\!]_1 - m_1'$ |
| $[\![\Delta_0 \cdot [\![v']\!]_1]\!]_0 \leftarrow [\![\Delta_0 \cdot [\![v]\!]_1]\!]_0 - [\![\Delta_0 \cdot m_1']\!]_0$ | $[\![\Delta_0 \cdot [\![v']\!]_1]\!]_1 \leftarrow [\![\Delta_0 \cdot [\![v]\!]_1]\!]_1 - [\![\Delta_0 \cdot m_1']\!]_1$ |
| Receive $[\![v']\!]_1, h'$ | Send $[\![v']\!]_1, h([\![\Delta_0 \cdot [\![v']\!]_1]\!]_1)$ |
| Verify MAC for $[\![v']\!]_1, [\![\Delta_0 \cdot [\![v']\!]_1]\!]_0, h'$ | |
| $[\![p]\!]_0 \leftarrow \text{split}([\![v]\!]_0)$ | |
| $[\![p]\!]\!\rangle_0 \leftarrow ([\![p]\!]_0, [\![\Delta_0 \cdot p_1']\!]_0)$ | $[\![p]\!]\!\rangle_1 \leftarrow (p_1', [\![\Delta_0 \cdot p_1']\!]_1)$ |

---

# FIG. 20

FIG. 21

Europäisches
Patentamt

European
Patent Office

Office européen
des brevets

**EUROPEAN SEARCH REPORT**

**Application Number**

EP 26 15 3510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 509 172 A (UNIV SHAANXI NORMAL) 16 August 2024 (2024-08-16) * abstract * * paragraphs [0001] - [0075] * * paragraphs [0127] - [0212] * ----- | 1-15 | INV. H04L9/30 H04L9/32 |
| X | YAN YINGFEI ET AL: "Lattice-Based Threshold, Accountable, and Private Signature", 6 May 2024 (2024-05-06), TOPICS IN CRYPTOLOGY - CT-RSA 2024; [LECTURE NOTES IN COMPUTER SCIENCE; LECT.NOTES COMPUTER] SPRINGER NATURE SWITZERLAND, CHAM, PAGE(S) 249 - 274, XP047700227, ISSN: 0302-9743 ISBN: 9783031588679 [retrieved on 2024-05-06] * abstract * * Chapter 1: "Introduction" * * Chapter 3: "Lattice-Based TAPS" * ----- | 1-15 | |
| X | DEL PINO RAFAEL ET AL: "Threshold Raccoon: Practical Threshold Signatures from Standard Lattice Assumptions", 8 May 2024 (2024-05-08), ADVANCES IN CRYPTOLOGY - EUROCRYPT 2024; [LECTURE NOTES IN COMPUTER SCIENCE; LECT.NOTES COMPUTER] SPRINGER NATURE SWITZERLAND, CHAM, PAGE(S) 219 - 248, XP047759492, ISSN: 0302-9743 ISBN: 9783031587221 [retrieved on 2024-05-08] * abstract * * Chapter 1: "Introduction" * * Chapter 6:"TRaccoon: Our Threshold Signature Scheme" * ----- -/-- | 1-15 | **TECHNICAL FIELDS SEARCHED (IPC)** H04L |

The present search report has been drawn up for all claims

| Place of search | Date of completion of the search | Examiner |
|---|---|---|
| Munich | 8 May 2026 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 26 15 3510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEETER LAUD ET AL: "DiLizium 2.0: Revisiting Two-Party Crystals-Dilithium", IACR INTERNATIONAL ASSOCIATION FOR CRYPTOLOGIC RESEARCH, vol. 20230703:082131, 3 July 2023 (2023-07-03), pages 1-17, XP061078320, [retrieved on 2023-07-03] * abstract * * Chapter 1: "Introduction" * * Chapter 2: "Our scheme" *  ----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 8 May 2026 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 3510

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2026

| Patent document cited in search report | Publication date | Patent family member(s) | Publication date |
|---|---|---|---|
| CN 118509172 A | 16-08-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018073685 A1

**Non-patent literature cited in the description**

- **DUCAS et al.** CRYSTALS-Dilithium: A Lattice-Based Digital Signature Scheme. *IACR Transactions on Cryptographic Hardware and Embedded Systems*, vol. 2018 (1), 238-268

- **RIKKE BENDLIN et al.** Semi-Homomorphic Encryption and Multiparty Computation. *Advances in Cryptology - EUROCRYPT 2011 - 30th Annual International Conference on the Theory and Applications of Cryptographic Techniques, Tallinn, Estonia*, 15 May 2011